(19) Europäisches Patentamt
European Patent Office
Office européen des brevets

(11) **EP 3 810 917 B1**

(12) **EUROPÄISCHE PATENTSCHRIFT**

(45) Veröffentlichungstag und Bekanntmachung des Hinweises auf die Patenterteilung:
**20.12.2023 Patentblatt 2023/51**

(21) Anmeldenummer: **19732977.4**

(22) Anmeldetag: **20.06.2019**

(51) Internationale Patentklassifikation (IPC):
**F02D 41/14** (2006.01)    **G01L 3/10** (2006.01)
**F02D 35/02** (2006.01)    **F02D 41/00** (2006.01)

(52) Gemeinsame Patentklassifikation (CPC):
**F02D 41/1497; F02D 35/028; F02D 41/009; G01L 3/104; G01L 3/109;** F02D 2200/1002

(86) Internationale Anmeldenummer:
**PCT/EP2019/066316**

(87) Internationale Veröffentlichungsnummer:
**WO 2019/243483 (26.12.2019 Gazette 2019/52)**

(54) **VERFAHREN ZUM BETREIBEN EINER KOLBENMASCHINE UND EINE KOLBENMASCHINE**

METHOD FOR OPERATING A PISTON ENGINE, AND PISTON ENGINE

PROCÉDÉ DE FONCTIONNEMENT D'UNE MACHINE À PISTON ET MACHINE À PISTON

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2018 DE 102018115082**

(43) Veröffentlichungstag der Anmeldung:
**28.04.2021 Patentblatt 2021/17**

(73) Patentinhaber: **Rolls-Royce Solutions GmbH 88045 Friedrichshafen (DE)**

(72) Erfinder:
• **KNABE, Helmut 88048 Friedrichshafen (DE)**
• **WEIDELE, Horst 88709 Meersburg (DE)**
• **TOTH, Aron 88048 Friedrichshafen (DE)**

(74) Vertreter: **Eisenführ Speiser Patentanwälte Rechtsanwälte PartGmbB Stralauer Platz 34 10243 Berlin (DE)**

(56) Entgegenhaltungen:
EP-A2- 1 426 598      JP-A- 2003 065 136
JP-A- 2018 053 742      US-A- 5 771 482
US-A1- 2017 241 357

**Beschreibung**

Die Erfindung betrifft ein Verfahren zum Betreiben einer Kolbenmaschine, insbesondere einer Brennkraftmaschine, vorzugsweise ein Verfahren zum Betreiben einer Kolbenmaschine mit einer Elektromaschine, insbesondere Generator oder Motor, vorzugsweise als Hybridantrieb. Die Kolbenmaschine weist eine Anzahl Zylinder auf, sowie eine mit Grundlagern gelagerte Kurbelwelle mit einer Anzahl Kröpfungen und Wellenzapfen, welche eine Bewegung eines Kolbens in einem der Zylinder aus der Anzahl der Zylinder durch eine an einer Kröpfung der Kurbelwelle angebrachte Pleuelstange, unter Drehmomentbeaufschlagung der Kurbelwelle, in eine Drehbewegung umsetzt, unter torsionsbedingter Verformung der drehmomentbeaufschlagten Kurbelwelle. Die Kolbenmaschine weist weiter eine der Kurbelwelle zugeordnete Drehmomentsensorik mit wenigstens einem ersten und einem zweiten Drehwinkelsensor auf. Die Erfindung betrifft weiter eine entsprechende Kolbenmaschine.

In einer Brennkraftmaschine kann ein Drehmoment regelmäßig aus theoretischen Werten der Zylinderfüllungen berechnet werden, welche wiederum aus theoretischen, im Motorsteuergerät (ECU) hinterlegten Werten von Einspritzmengen der Brennstoff-Injektoren ermittelt werden. Bauartbedingt weisen die Brennstoff-Injektoren jedoch einerseits eine gewisse Streuung auf und zeigen andererseits eine Drift in Folge ihrer Alterung. Eine Motorregelung, welche auf dem errechneten Drehmoment basiert, erfolgt somit auf Basis eines theoretischen Drehmoments als Eingangsgröße. Dieses kann von dem tatsächlichen Drehmoment abweichen, wodurch die Motorregelung gegebenenfalls unsauber wird.

Wenn die Motorregelung der Brennkraftmaschine auf Basis eines rechnerisch ermittelten Drehmoments erfolgt, ist eine Verbesserung der Motorregelung also eng mit dem Verfahren der rechnerischen Ermittlung des Drehmoments verbunden.

Bei Elektromaschinen beispielsweise kann das Drehmoment aber direkt aus den elektrischen Leistungsdaten berechnet werden. Andererseits eignen sich diese nicht zur Zustandsüberwachung oder präventiven Wartung oder Frühschadenserkennung, da geeignete Eingangsgrößen nicht hinreichend genau ermittelt werden können; wie z. B. die Eingangsgröße einer Primärenergie für Wind- oder Wasserkraft.

Bei Brennkraftmaschinen gestaltet sich die messtechnische Ermittlung des Drehmoments noch schwieriger, sodass im Stand der Technik verschiedenste Ansätze für eine Ermittlung des Drehmoments der Kurbelwelle vorherrschen. So werden denn verschiedene Realisierungen einer Drehmomentermittlung vorgeschlagen, die vor allem der Bestimmung eines Nutz-Drehmoments der Kurbelwelle dienen und welche unter anderem auf Dehnmessstreifen (DMS) Sensoren zurückgreifen.

Ein besonderes Interesse liegt aber zudem in der messtechnischen Bestimmung eines einem individuellen Zylinder entsprechenden Drehmoments als Beitrag zum Gesamtdrehmoment, da dieses von Zylinder zu Zylinder unterschiedlich sein kann.

Des Weiteren kann aber durch einen Defekt an einem Zylinder im Unterschied zu einem benachbarten Zylinder nicht nur ein erheblicher Unterschied beim zylinderindividuellen Drehmoment-Beitrag zum Nutz-Drehmoment entstehen, sondern es können auch erhebliche innere Drehmomente als Drehmomentbelastungen oder Twist in der Kurbelwelle vorliegen.

WO 2007/01255 A1 beschreibt ein Verfahren zum Betreiben eines Verbrennungsmotors, wobei mittels Modellierung --d. h. lediglich rein theoretisch-- zylinderindividuelle Drehmomente errechnet werden. Hierbei werden an einem ersten und einem zweiten Ende längs einer Kurbelwelle Drehkenngrößen berechnet. Dabei wird unter einer Drehkenngröße eine Winkelposition, eine Winkelgeschwindigkeit oder ein Drehmomentwert an einem Abschnitt der Welle verstanden. Der erste Ort ist bevorzugt ein erstes Ende der Welle. Aus der Winkelbeschleunigung, einem Trägheitsmoment der rotierenden Massen, einem Drehmoment oszillierender Massen und einem Reibungsdrehmoment wird unter Rückgriff auf ein im Steuergerät abgelegtes Kennlinienfeld, das vorher mittels Belastungsversuchen bei verschiedenen Drehzahlen und Lasten erstellt wurde, ein effektives Drehmoment bestimmt, das an einer Abtriebsseite der Welle wirkt. Mit Hilfe des effektiven Drehmomentes wird ein Gasdrehmomentverlauf modelliert und aus dem Gasdrehmomentverlauf werden zylinderindividuelle Drehkenngrößen bestimmt.

Die in WO 2007/01255 A1 beschriebene, modellbasierte --d. h. lediglich rein theoretischeVorgehensweise zur Ermittlung zylinderindividueller Drehmomente hat zudem den Nachteil, dass unter Berücksichtigung der ersten Drehkenngröße und der zweiten Drehkenngröße eine für den gesamten Verbrennungsmotor charakteristische dritte Drehkenngröße bestimmt wird, und die zylinderindividuellen Drehkenngrößen aus einem den Verbrennungsmotor repräsentierenden Modell bestimmt werden. Die Eingangsgrößen des Modells basieren auf der ersten Drehkenngröße, der zweiten Drehkenngröße und der dritten Drehkenngröße. Somit erfolgt die Motorregelung weiterhin auf modellierten Drehmoment-Eingangsgrößen und lässt sichere Aussagen über zylinderindividuelle Drehmomente, insbesondere über den Zustand einzelner Zylinder, z. B. einen Defekt am Zylinder, nicht zu. Um die ermittelten Drehmomente als Eingangsgrößen für die Motorregelung zu nutzen, zum Beispiel für eine Regelung der Brennstoffinjektion, wird ein wesentlich genaueres Verfahren benötigt, welches auf tatsächlich gemessen Größen beruht.

Auch in dem Artikel "Masseträgheitsloses Messsystem für Winkel- und Drehzahlmessung in hochdynamischen Antrieben" --von Dr. Rolf Sattler, Sensitec GmbH, erschienen in Konstruktion S2-2016, Springer Verlag-- geht es bei dem beschriebenen Verfahren zunächst nur um die Winkelstellung und Drehgeschwindigkeit von hochdynamischen drehenden Bauteilen. Es wird allerdings --grundsätzlich interessant-- beschrieben, dass die Motorwelle selbst als Maßverkörperung für einen Rotorlagegeber genutzt wird. Dies muss jedoch durch einen Zahnsensor ermöglicht werden, welcher auf dem GMR (Giant Magnetoresistive)-Effekt basiert, und ein zahnähnliches Profil abtastet, welches direkt in die Motorwelle eingearbeitet ist. Hierbei wird ein GMR-Sensorchip an einem Stützmagneten befestigt und über der Zahnstruktur angebracht. Durch diese Anordnung können Änderungen des Magnetfelds hochpräzise und über einen hohen Dynamikbereich erfasst werden.

WO 99/54697 beschreibt eine Vorrichtung zur Erfassung des auf eine drehbare Welle wirkenden Drehmoments, bei der mit Hilfe eines einzigen Sensors zwei mit der Welle verbundene Teile, welche eine wählbare Struktur aufweisen und sich unter Einfluss einer vom Drehmoment verursachten Torsion in der Welle relativ zueinander bewegen, abgetastet werden. Aus dem vom Sensor gelieferten Ausgangssignal wird ein Rechtecksignal bzw. ein Digitalsignal gebildet, dessen Verhältnis von Pulslänge zur Gesamtpulslänge mit dem Duty-Cycle bei unbelasteter Welle verglichen wird. Die Duty-Cycle Änderung gegenüber der unbelasteten Welle ist proportional zum Drehmoment und wird zur Ermittlung des Drehmoments ausgewertet.

EP 2 673 594 B1 beschreibt ein Verfahren und eine Vorrichtung zur Durchführung des Verfahrens zum Erfassen des Verdrehwinkels einer Welle und/oder eines an der Welle auftretenden Drehmoments. Das beschriebene Verfahren nutzt hierbei zwei induktive Sensoren, mit denen jeweils durch einen Vergleich mit einem Referenzmuster ein Drehwinkel ermittelt wird. Aus der Differenz der beiden Drehwinkel wird wiederum der Verdrehwinkel der Welle bestimmt.

US 2017/241357 A1 offenbart zwei magnetosensitive Sensoren, welche eine Kurbelwellentorsion messen und zusammen mit Messwerten eines Lambdasensors sowie eines Abgasdrucksensors unter Zuordnung eines jeweiligen Konfidenzniveaus der gemessenen Werte eine Ermittlung der zylinderindividuellen Ungleichförmigkeiten ermöglichen.

Die genannten Verfahren und Vorrichtungen implizieren zwar den Entfall einer standardmäßigen Drehzahlermittlung am Schwungrad, da die Drehzahl der Kurbelwelle rechnerisch ermittelt werden kann. Es ist dennoch wünschenswert ein Verfahren bereitzustellen, welches vor allem Drehmomentbelastungen oder einen Twist in der Kurbelwelle zu bestimmen erlaubt und insbesondere zum Monitoring bzw. Schadensfrüherkennung brauchbar ist sowie zudem die Motorregelung auf Basis verlässlicher bestimmter Nutz-Drehmomente verbessert. Vorzugsweise ist ein Verfahren bereitzustellen, das zudem die Sensorik vereinfacht und gleichwohl verlässlich ist.

An dieser Stelle setzt die Erfindung an, deren Aufgabe es ist, ein Verfahren und eine Vorrichtung anzugeben mittels denen eine Kolbenmaschine in verbesserter Weise betreibbar ist, auf Basis verlässlicher bestimmter Drehmomente. Dies betrifft insbesondere eine Drehmomentbelastung oder ein "Twist" in einer Kurbelwelle. Vorteilhaft soll eine Schadensfrüherkennung infolge der verlässlich bestimmten Drehmomentbelastungen, insbesondere innerer Drehmomente einer Kurbelwelle, möglich sein. Eine Kolbenmaschine soll auch in verbesserter Weise betreibbar sein, auf Basis von verlässlicher bestimmten Drehmomenten, insbesondere synergetisch auch auf Basis der Nutz-Drehmomente, insbesondere externer Drehmomente einer Kurbelwelle. Vorteilhaft soll eine Motorregelung verbessert werden. Vorzugsweise soll insbesondere eine laufende Zustandsüberwachung im Betrieb einer Kolbenmaschine ermöglicht werden.

Hinsichtlich des Verfahrens wird diese Aufgabe gelöst durch ein Verfahren gemäß Anspruch 1.

Die Erfindung betrifft ein Verfahren zum Betreiben einer Kolbenmaschine, insbesondere einer Brennkraftmaschine, vorzugsweise ein Verfahren zum Betreiben einer Kolbenmaschine mit einer Elektromaschine, insbesondere Generator und/oder Motor, vorzugsweise als Hybridantrieb, wobei die Kolbenmaschine

- eine Anzahl Zylinder aufweist, sowie
- eine mit Lagerzapfen in Grundlagern gelagerte Kurbelwelle aufweist, die weiter zwischen den Lagerzapfen eine Anzahl von Kröpfungen und Wellenzapfen in abwechselnder Abfolge aufweist, wobei

  - die Kurbelwelle eine Bewegung wenigstens eines Kolbens in einem Zylinder der Anzahl Zylinder unter Lastaufnahme durch eine an einer der Kröpfungen der Kurbelwelle angebrachte wenigstens eine Pleuelstange in eine Drehbewegung umsetzt,
  und
  - die Kurbelwelle durch die Lastaufnahme eine Torsion bewirkende Verformung und/oder Verspannung erfährt,
  und

- die Kolbenmaschine weiter eine der Kurbelwelle zugeordnete Drehmomentsensorik mit wenigstens einem ersten und einem zweiten Drehwinkelsensor aufweist.

Die eine Torsion bewirkende Verformung und/oder Verspannung kann insbesondere dynamisch und/oder schwingend die Kurbelwelle lastbeaufschlagen, sodass diese tordiert wird. Zudem kann die Kurbelwelle gebogen, gedehnt oder gestaucht oder dergleichen verformt und/oder verspannt werden, was ebenfalls im Ergebnis zu einer Torsion beitragen kann.

Erfindungsgemäß ist vorgesehen, dass in dem Verfahren

- der erste und der zweite Drehwinkelsensor magnetosensitive, insbesondere magnetoresistive und/oder magnetoelastische, Sensoren sind und Teil einer Anzahl von zueinander beabstandeten Drehwinkelsensoren sind und einen ersten und zweiten Drehwinkel der Torsion unmittelbar der Kurbelwelle derart messen, dass
- der erste und zweite Drehwinkelsensor über einen Abstandsbereich der Kurbelwelle voneinander beabstandet sind, wobei

  der erste und zweite Drehwinkel in dem Abstandsbereich gemessen werden, und
- ein Winkelversatz zwischen dem ersten und zweiten Drehwinkel ermittelt wird, welcher aus der Torsion der lastbeaufschlagten Kurbelwelle resultiert, und
- sich der Abstandsbereich zwischen dem ersten und zweiten Drehwinkelsensor entlang der Kurbelwelle auf einen Teilbereich des Abstands zwischen den Lagerzapfen beschränkt, und
- der Teilbereich eine Untergruppe der Anzahl Kröpfungen und/oder Wellenzapfen umfasst, sodass der Winkelversatz der Untergruppe der Anzahl Kröpfungen und Wellenzapfen zuzuordnen ist, wobei
- sich der Abstandsbereich zwischen dem ersten und zweiten Drehwinkelsensor entlang der Kurbelwelle auf einen Teilbereich des Abstands zwischen den Lagerzapfen beschränkt, und
- der Teilbereich eine Untergruppe der Anzahl Kröpfungen und/oder Wellenzapfen umfasst, sodass der Winkelversatz der Untergruppe der Anzahl Kröpfungen und Wellenzapfen zuzuordnen ist, wobei
- der Abstandsbereich beschränkt ist auf- wenigstens einen Wellenzapfen-Bereich, umfassend wenigstens einen Wellenzapfen zwischen einer ersten und einer zweiten Kröpfung, und/oder
- wenigstens einen Kröpfungs-Bereich, umfassend wenigstens eine Kröpfung, derart, dass
- der Winkelversatz dem wenigstens einen Wellenzapfen und/oder der wenigstens einer Kröpfung zugeordnet werden kann.

Die Erfindung führt weiterhin auf eine entsprechende Kolbenmaschine nach Anspruch 15.

Die Erfindung geht von der Überlegung aus, dass die Kurbelwelle im Betrieb einer Kolbenmaschine aufgrund ihrer Elastizität einer Torsion, infolge von Verformung und/oder Verspannung unterliegt. Diese kann am besten --und dann besonders verlässlich auch über einen großen Dynamikbereich-- über Sensoren erfasst werden. Aus dem durch die Sensoren ermittelten Winkelversatz kann zunächst ein die Torsion (oder Twist) kennzeichnendes inneres Drehmoment, insbesondere daraus wiederum das Nutz-Drehmoment der Kurbelwelle --dann bevorzugt rechnerisch-- ermittelt werden. Hierbei ist zu erwarten, dass das innere Drehmoment entlang der Kurbelwelle aufgrund der zeitlich versetzten Arbeitszyklen der Zylinder unterschiedlich ist. Auch Schäden, z. B. an einzelnen Zylindern der drehmomentbeaufschlagten Kurbelwelle, können zu unterschiedlichen Drehmomenten entlang der Kurbelwelle führen. Folglich ist eine genaue Kenntnis über eine insofern Torsionsverteilung entlang der Kurbelwelle von großem Interesse, da darauf aufbauend ein Nutz-Drehmoment bestimmt und infolge dessen die Motorregelung einer Kolbenmaschine verbessert werden kann. Von gesteigertem Interesse ist hierbei eine zylinderindividuelle Verbesserung und Regelung der Brennstoffinj ektion.

Bei einem Verfahren des Standes der Technik wird das Drehmoment zwar regelmäßig direkt an der Kurbelwelle ermittelt, jedoch entspricht dieses Drehmoment der Summe einzelner, zylinderzugeordneter Drehmomente; also letztlich nur einem geschätzten Nutz-Drehmoment. Ein Twist oder inneres Drehmoment der Kurbelwelle wird nicht erfasst. Allerdings ist es in gegenwärtigen Lösungen auch nicht vorgesehen, mehrere (insofern innere) Drehmomente entlang der Kurbelwelle auf Basis von tatsächlich gemessenen Größen zu ermitteln und die ermittelten Drehmomente für eine laufende Zustandsüberwachung im Betrieb der Kolbenmaschine einzusetzen oder diese zur Verbesserung von Regelaufgaben oder für eine Schadensfrüherkennung zu nutzen.

Versuche, die zylinderzugeordneten Drehmomente für eine verbesserte Motorregelung zu Verfügung zu stellen, beschränken sich bislang lediglich auf eine Modellierung der zylinderzugeordneten Drehmomente. Die Modellierung basiert hierbei auf wenigen, durch Drehwinkelmessungen ermittelten Drehmomenten. Bislang ist somit ein Verfahren für eine Motorregelung auf Basis zylinderzugeordneter Drehmomente, welche aus tatsächlich gemessenen Größen ermittelt werden, nicht bekannt. Weiterhin ist bislang keine laufende Überwachung der Kolbenmaschine auf Basis von laufend ermittelten und zylinderzugeordneten Drehmomenten vorgesehen. Eine Zustandsüberwachung ist jedoch von großem Interesse, da sich hierdurch unter anderem Regelaufgaben, wie beispielsweise die Regelung der Einspritzmenge, verbessern lassen.

Der Erfindung liegt die Erkenntnis zu Grunde, dass eine Verbesserung der Motorregelung durch eine verbesserte Ermittlung des Drehmoments über zylinderindividuelle Sensoren ermöglicht wird. Damit sollen zylinderzugeordnete Drehmomente ermittelt werden, sodass die Motorregelung auf tatsächlichen Drehmomenten und nicht wie in gegenwärtigen Lösungen auf theoretischen oder modellbasierten Drehmomenten erfolgt.

Der erste und zweite Drehwinkelsensor sind über einen Abstandsbereich der Kurbelwelle voneinander beabstandet und diesem Abstandsbereich der Kurbelwelle zugeordnet. Der Abstandsbereich entlang der Kurbelwelle ist auf einen Teilbereich des Abstands zwischen den Grundlagern beschränkt. Der Abstandsbereich weist entsprechend eine kürzere Länge als die Gesamtlänge der Kurbelwelle auf. Der Abstandsbereich, der auf einen Teilbereich des Abstands zwischen den Grundlagern beschränkt ist, umfasst dementsprechend eine Untergruppe der Anzahl Kröpfungen und Wellenzapfen. Eine entsprechende Untergruppe umfasst also eine geringere Anzahl Kröpfungen und Wellenzapfen als die Gesamtlänge der Kurbelwelle, die sich zwischen den Grundlagern erstreckt. Somit sind der erste und zweite Drehwinkelsensor, die dem Abstandsbereich zugeordnet sind, einer kleineren Anzahl Kröpfungen und Wellenzapfen als die Anzahl Kröpfungen und Wellenzapfen der gesamten Kurbelwelle zugeordnet.

Vorzugsweise soll hierbei durch mehrere Sensoren für jeden Zylinder ein zylinderzugeordnetes Drehmoment laufend im Betrieb der Kolbenmaschine ermittelt werden, sodass die Motorregelung einer Kolbenmaschine auf Basis gemessener Eingangsgrößen erfolgt. Die Motorregelung erfolgt im Vergleich zum Stand der Technik somit nicht mehr auf theoretisch ermittelten Drehmomenten, sondern basiert auf den tatsächlichen, durch Sensoren ermittelten, zylinderzugeordneten Drehmomenten.

Erfindungsgemäß werden hierbei wenigstens zwei Sensoren wenigstens einem Zylinder zugeordnet, wobei zwischen den beiden Sensoren mindestens eine Kröpfung der drehmomentbeaufschlagten Kurbelwelle liegt. Unter einer Kröpfung ist ein Stück der Kurbelwelle zu verstehen, an dem sich die Pleuellagerung befindet; mit anderen Worten ist also eine Kröpfung der Kurbelwelle ein Stück der Kurbelwelle, welches zwischen zwei Wellenzapfen liegt. Eine Kröpfung umfasst hierbei zwei Kurbelwangen und einen Kurbelzapfen. Bevorzugt sind wenigstens zwei Sensoren wenigstens einem Zylinder zugeordnet, wobei zwischen den beiden Sensoren bevorzugt eine Kröpfung der drehmomentbeaufschlagten Kurbelwelle liegt; d. h. die Sensoren sind jeweils an oder über den beiden benachbarten Wellenzapfen der Kröpfung angeordnet.

Der erste und zweite Drehwinkelsensor sind gemäß dem Konzept der Erfindung magnetosensitive, insbesondere magnetoresistive und/oder magnetoelastische, Sensoren, die ein präzises Erfassen eines Winkelversatzes des ersten und zweiten Drehwinkelsensors ermöglichen über eine Änderung eines Magnetfeldes infolge der Verspannung und/oder Torsion der Drehmoment beaufschlagten Kurbelwelle. Unter einem magnetosensitiven Sensor ist also allgemein ein eine Magnetfeldänderung sensierender oder auf eine Magnetfeldänderung reagierender Sensor zu verstehen. Als besonders vorteilhaft hat sich hier vor allem ein magnetoresistiver Sensor erwiesen. Es eignet sich gleichwohl auch ein magnetoelastischer Sensor, welcher eine Magnetfeldänderung sensiert auf Grundlage des magnetoelastischen Effekts, also insbesondere magnetotriken Effekts oder des inversen magnetostriken Effekts.

Ein ermittelter Winkelversatz kann der Untergruppe der Anzahl Kröpfungen und Wellenzapfen zugeordnet werden. Die Untergruppe der Anzahl Kröpfungen und Wellenzapfen umfasst hierbei die Anzahl Kröpfungen und Wellenzapfen, die sich in dem Abstandbereich zwischen dem ersten und zweiten Drehwinkelsensor befinden. Der ermittelte Winkelversatz kann also einem Teilbereich des Abstands zwischen den Grundlagern zugeordnet werden, der durch den Abstandsbereich zwischen dem ersten und zweiten Drehwinkelsensor definiert wird.

Durch die vorgeschlagene Anordnung von jeweils zwei magnetosensitiven, insbesondere magnetoresistive und/oder magnetoelastische, Drehwinkelsensoren pro Kröpfung lässt sich eine zylinderzugeordnete Verteilung der torsionsbedingten Belastung der Kurbelwelle im Betrieb der Kolbenmaschine ermitteln. Besonders interessant ist hierbei, dass die Kenntnis über zylinderindividuelle Drehmomente genutzt werden kann, um die Motorregelung im laufenden Betrieb der Kolbenmaschine zu verbessern. Ein besonderes Interesse liegt hierbei auf der Optimierung der Brennstoffinjektion. Das erfindungsgemäße Verfahren eignet sich auch für die Zustandsüberwachung der Kolbenmaschine im laufenden Betrieb der Kolbenmaschine Die Erfindung hat den Vorteil, dass besonders bei hohen Drehzahlen eine torsionsbedingte elastische Verformung gegeben ist, welche am besten --und auch dann besonders verlässlich über einen großen Dynamikbereich-- über Sensoren erfasst werden kann.

Weiterhin liegt die Erfindung der Erkenntnis zu Grunde, dass die auf Basis der zylinderzugeordneten Sensoren ermittelten Drehmomente für Regelaufgaben der Motorregelung der Kolbenmaschine genutzt werden können. Vorteilhafterweise kann dies für eine Verringerung der Schadstoffemissionen durch Regelung der Einspritzmenge genutzt werden. Außerdem ermöglicht die wiederholte Ermittlung von Drehmomenten eine laufende Zustandsüberwachung der Kolbenmaschine, welche z. B. zur prädiktiven Wartung und Schadensfrüherkennung genutzt werden kann.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer bevorzugten Weiterbildung wird mittels des Versatzrechners ein dem Abstandsbereich zugeordnetes, aus dem gemessenen ersten und zweiten Drehwinkel resultierendes Drehmoment ermittelt, wobei das dem Abstandsbereich zugeordnete Drehmoment, insbesondere wiederholt, im laufenden Betrieb der Kolbenmaschine ermittelt wird. Die Sensoren messen jeweils einen Drehwinkel aus denen dann mittels eines Versatzrechners rechnerisch ein Winkelversatz ermittelt wird. Aus dem Winkelversatz wird dann durch den Versatzrechner rechnerisch ein Drehmoment ermittelt, welches dem Kurbelwellenstück, also dem Abstandsbereich, zwischen den beiden Sensoren zugeordnet ist.

In Abhängigkeit der Bauart des Motors kann so mittels des Versatzrechners ein einem individuellen Zylinder zugeordnetes Drehmoment erfasst werden: bei einem Reihenmotor wirkt genau ein Zylinder pro Kröpfung, wohingegen bei einem V-Motor zwei Zylinder pro Kröpfung wirken. Im letzteren Fall erlaubt der zeitliche Versatz die zylinderspezifische Zuordnung des aus dem Versatzrechner ermittelten Winkelversatzes. Auch bei weiteren Bauarten eines Motors, wie z.B. einem Doppel-V-Motor oder einem W-Motor kann entsprechend mittels des Versatzrechners ein einem individuellen Zylinder zugeordnetes Drehmoment erfasst werden

Denkbar ist auch einen Winkelversatz zu ermitteln, welcher mehr als einem Zylinder zugeordnet ist. Dies ist möglich, indem man den Winkelversatz zwischen Drehwinkeln errechnet, welche von Drehwinkelsensoren gemessen wurden, zwischen denen mehrere Kröpfungen liegen.

In einer bevorzugten Weiterbildung ist vorgesehen, dass zum wiederholten Ermitteln des dem Abstandsbereich der Kurbelwelle zugeordneten Drehmoments eine torsionsbedingte Belastung der Kurbelwelle wenigstens einmal pro Arbeitszyklus eines Zylinders laufend erfasst wird.

Durch die wiederholte Ermittlung der zylinderzugeordneten Anzahl von Drehmomenten ist es möglich, eine zeitlich aufgelöste Torsionsverteilung entlang der drehmomentbeaufschlagten Kurbelwelle im laufenden Betrieb der Kolbenmaschine zu erhalten. Die wiederholte Messung der zylinderzugeordneten Drehwinkel ermöglicht vorteilhafterweise einen zeitlichen Verlauf der zylinderzugeordneten Belastung der Kurbelwelle festzustellen. Aus den gemessenen Drehwinkeln werden von dem Versatzrechner laufend zylinderzugeordnete Drehmomente rechnerisch ermittelt. Dadurch lässt sich eine Erfassung von Leistungsdaten durchführen, die der Echtzeit-Leistung der Kolbenmaschine entsprechen. Eine Kenntnis über die Echtzeit-Leistung ist von großem Interesse, da dadurch die Motorregelung im Betrieb der Kolbenmaschine verbessert und zeitnah auf negative Einflüsse reagiert werden kann. Insbesondere ist eine Echtzeitüberwachung des Klopfens, also der unkontrollierten Selbstzündung bei der Gasverbrennung, bevorzugt. Denkbar ist auch, dass mehrere Arbeitszyklen des Zylinders zwischen der wiederholten Ermittlung der zylinderzugeordneten Anzahl von Drehmomenten liegen.

Erfindungsgemäß ist der Abstandsbereich beschränkt auf einen Wellenzapfen-Bereich umfassend wenigstens einen Wellenzapfen zwischen einer ersten und einer zweiten Kröpfung und/oder einen Kröpfungs-Bereich umfassend wenigstens eine Kröpfung, derart, dass der Winkelversatz dem wenigstens einen Wellenzapfen und/oder der wenigstens einen Kröpfung zugeordnet werden kann. Insbesondere liegt der Abstandsbereich zwischen zwei benachbarten Kröpfungen, sodass zwischen dem ersten Drehwinkelsensor und dem zweiten Drehwinkelsensor eine freie Länge der Kurbelwelle, insbesondere ein freies Stück eines Wellenzapfens der Kurbelwelle, liegt.

In einer Weiterbildung ist der Abstandsbereich beschränkt auf einen Wellenzapfen-Einzelbereich umfassend einen einzigen Wellenzapfen zwischen einer ersten und einer zweiten Kröpfung und/oder einen Kröpfungs-Einzelbereich umfassend eine einzige Kröpfung, derart, dass der Winkelversatz dem einzigen Wellenzapfen und/oder der einzigen Kröpfung zugeordnet werden kann. Insbesondere befindet sich in dem Abstandsbereich eine einzige Kröpfung der Kurbelwelle, sodass der erste Drehwinkelsensor entlang der Kurbelwelle vor der entsprechenden Kröpfung angeordnet ist und der zweite Drehwinkelsensor entlang der Kurbelwelle hinter der entsprechenden Kröpfung angeordnet ist.

Eine Weiterbildung sieht eine Anzahl von Drehwinkelsensoren vor, welche den über den Abstandsbereich der Kurbelwelle beabstandeten ersten und zweiten Drehwinkelsensor umfassen, wobei die Anzahl der Drehwinkelsensoren magnetosensitive, insbesondere magnetoresistive und/oder magnetoelastische, Sensoren sind.

In einer Weiterbildung umfasst die Anzahl von zueinander beabstandeten Drehwinkelsensoren eine Mehrzahl von Paaren erster und zweiter Drehwinkelsensoren zwischen den Grundlagern, die jeweils über einen Einzelbereich, insbesondere Wellenzapfen-Einzelbereich und/oder Kröpfungs-Einzelbereich, der Kurbelwelle voneinander beabstandet sind. Insbesondere sind weitere Sensoren der Anzahl von zueinander beabstandeten Drehwinkelsensoren entsprechenden weiteren Abstandsbereichen der Kurbelwelle zugeordnet, insbesondere sind jeweils zwei Sensoren der Anzahl von zueinander beabstandeten Drehwinkelsensoren jeweils einem weiteren Abstandsbereich der Kurbelwelle zugeordnet.

In einer bevorzugten Weiterbildung ist vorgesehen, dass durch das wiederholte Ermitteln eines dem Abstandsbereich zugeordneten Drehmoments, mittels eines Motorsteuergeräts (ECU), eine laufende Regelung und/oder Überwachung der Brennstoffinjektion ermöglicht wird, insbesondere wird eine Regelung und/oder Überwachung der Brennstoffinjektion in den Zylinder ermöglicht, der mittels einer Pleuelstange an eine Kröpfung angebracht ist, die in dem Abstandsbereich umfasst ist oder die an den Abstandsbereich angrenzt, insbesondere zur Verringerung der Schadstoffemissionen der Kolbenmaschine und/oder zur dauerhaften Einhaltung von Emissionsgrenzwerten.

Neben weiteren Regelaufgaben ist insbesondere eine Regelung der Einspritzmenge über einen großen Dynamikbereich von großem Interesse, da dadurch die Schadstoffemissionen verringert und Emissionsgrenzwerte dauerhaft eingehalten werden können. Vorteilhafterweise wird somit eine dauerhafte Einhaltung von Umweltstandards ermöglicht.

Vorteilhaft ermöglicht dieses Verfahren die Echtzeitüberwachung der Verbrennung, was insbesondere hinsichtlich des Auftretens von Klopfen bei Gasmotoren von Vorteil ist.

In einer bevorzugten Weiterbildung ist vorgesehen, dass ein dem Abstandsbereich zugeordnetes Drehmoment auch bei Drehzahlen oberhalb von 2000U/min, insbesondere oberhalb 6000U/min, über wiederholte Drehmomentmessungen im laufenden Betrieb der Kolbenmaschine von einem ersten und zweiten Drehwinkelsensor der Anzahl der Drehwinkelsensoren erfasst wird.

Die Erfassung der Echtzeit-Leistung bei hohen Drehzahlen und insbesondere über einen großen Messbereich ist mit gegenwärtigen Lösungen regelmäßig nicht möglich. Insbesondere das erfindungsgemäße Verfahren mit jeweils zwei GMR-Sensoren pro Kröpfung erweist sich hier als besonders vorteilhaft.

In einer bevorzugten Weiterbildung ist vorgesehen, dass mehr als einer Kröpfung jeweils zwei der Drehwinkelsensoren zugeordnet sind, insbesondere, dass jeder Kröpfung jeweils zwei der Drehwinkelsensoren zugeordnet sind. Dadurch, dass mehreren Kröpfungen der Kurbelwelle jeweils zwei Drehwinkelsensoren zugeordnet sind, lässt sich für jede der Kröpfungen entlang der Kurbelwelle ein zylinderzugeordnetes Drehmoment ermitteln und somit eine Torsionsverteilung entlang der Kurbelwelle feststellen. Vorteilhafterweise kann somit die Brennstoffinjektion in die einzelnen Zylinder individuell geregelt und angepasst werden.

In einer weiteren Weiterbildung ist vorgesehen, dass die Kurbelwelle nicht kodiert ist.

Durch die inhärente Oberflächenstruktur der Kurbelwelle wird an jeder Stelle ein charakteristisches Magnetfeld erzeugt, welches von hochsensiblen Sensoren, wie z. B. GMR-Sensoren erfasst werden kann. Zugleich können bereits kleinste Änderungen der Magnetfeldverteilung detektiert werden, welche z. B. aus der elastischen Verformung der Kurbelwelle entstehen. Somit ist eine Kodierung der Kurbelwelle nicht notwendig. Eine Kodierung der Kurbelwelle kann aber eingesetzt werden, um die Änderungen des Magnetfeldes unter Belastung der drehmomentbeaufschlagten Kurbelwelle zu verstärken.

In einer weiteren bevorzugten Weiterbildung ist vorgesehen, dass mehr als zwei der Drehwinkelsensoren jeweils einer Kröpfung zugeordnet sind.

Die Anordnung von jeweils zwei kröpfungszugeordneten Drehwinkelsensoren derart, dass zwischen beiden Sensoren eine Kröpfung der drehmomentbeaufschlagten Kurbelwelle liegt, ermöglicht verlässliche und hochpräzise Winkelmessungen. Die torsionsbedingte, elastische Verformung wird hierbei durch einen Winkelversatz beider Sensoren zueinander erfasst. Aus diesem Winkelversatz kann, zeitlich aufgelöst, ein an individuellen Zylindern erzeugtes Drehmoment errechnet werden. Auf Grund der hohen Genauigkeit der Winkelmessungen können Drehmomente vorteilhafterweise über einen sehr großen Dynamikbereich erfasst werden.

Die Anzahl der Sensoren pro Kröpfung kann beliebig erhöht werden. Um einen zylinderzugeordneten Winkelversatz zu messen, sind jedoch mindestens zwei Drehwinkelsensoren pro Kröpfung notwendig. Für den Fall, dass nur ein Drehwinkelsensor einer Kröpfung zugeordnet ist kann ein Winkelversatz in Bezug auf einen weiteren Drehwinkelsensor ermittelt werden. Dieser entspricht dann einer Mittelung über mehrere Kröpfungen.

In einer weiteren Weiterbildung ist vorgesehen, dass wenigstens die dem Abstandsbereich zugeordneten Drehwinkelsensoren (S1, S2) nicht in Kontakt mit der Kurbelwelle sind, wodurch eine kontaktlose Ermittlung von den dem Abstandsbereich zugeordneten Drehwinkeln ermöglicht wird.

Dieses Verfahren kann besonders vorteilhaft mit Hilfe von magnetosensitiven Drehwinkelsensoren, nämlich ganz besonders vorteilhaft magnetoresistiven Drehwinkelsensoren, wie z. B. GMR-Sensoren, realisiert werden und bietet große Vorteile gegenüber Ausführungen bei denen Sensoren in Kontakt mit der Kurbelwelle stehen. Durch die Nutzung der Kurbelwelle als Maßverkörperung für das Messsystem wird die Kurbelwelle durch die Sensoren abgetastet. Somit entfällt ein zusätzliches Massenträgheitsmoment durch ein Messsystem, welches direkt an der Kurbelwelle angebracht wird und immer zusammen mit der Kurbelwelle beschleunigt oder abgebremst werden muss. Der Energiebedarf wird somit reduziert und somit Brennstoff eingespart. Vorteilhafterweise funktioniert das Messsystem auch bei hohen Drehzahlen verlässlicher als bekannte Lösungen. Insgesamt kann die Leistungselektronik kleiner dimensioniert werden und durch den Wegfall von zusätzlichen Bauelementen, insbesondere direkt an der Kurbelelle, wird das Gesamtsystem robuster.

Die Sensoren, insbesondere GMR-Sensoren, können an Stützmagneten befestigt sein, der die GMR-Sensoren in einem Abstand über der Kurbelwelle hält. Die GMR-Sensoren können aber auch direkt im Motorgehäuse oder an einer anderen Motorkomponente befestigt werden.

In einer weiteren Weiterbildung ist vorgesehen, dass wenigstens die dem Abstandsbereich zugeordneten Drehwinkelsensoren in Kontakt mit der Kurbelwelle direkt auf dieser angeordnet sind.

Für bestimmte Aufgaben oder je nach Verfügbarkeit von Messsensorik oder in Abhängigkeit von dem verfügbaren Platz, kann es vorteilhaft sein, die Drehwinkelsensoren direkt an der Kurbelwelle anzubringen. Auch mit dieser Variante ist eine zylinderzugeordnete Ermittlung von Drehwinkeln und Drehmomenten möglich.

In einer besonders bevorzugten Weiterbildung ist vorgesehen, dass die magnetoresistiven Sensoren insbesondere AMR- Sensoren, und/oder Hall- Sensoren und/oder GMR-Sensoren sind.

GMR-Sensoren zeichnen sich im Vergleich zu alternativen Sensoren durch besondere Vorteile aus. Ein Messsystem, welches auf GMR-Sensoren basiert ermöglicht eine hochpräzise Drehwinkelermittlung auch bei sehr hohen Drehzahlen. Diese Eigenschaft ist von immenser Bedeutung, da angestrebte höhere Leistungsdichten, insbesondere bei Elektromaschinen, mit höheren Betriebsdrehzahlen verbunden sind.

In einer Weiterbildung weist die Drehmomentsensorik einen magnetoelastischen Sensor, insbesondere magnetostriktive und/oder invers-magnetostriktive Sensoren auf, welcher beispielsweise Magnetostriktion bzw. die inverse Magnetostriktion, d.h. eine Änderung einer Magnetisierung durch mechanische Spannungen sowie Torsion, nutzt.

In einer weiteren Weiterbildung ist vorgesehen, dass die Drehmomentsensorik weitere Sensoren aufweist aus der Gruppe bestehend aus: Drehmomentflanschen, Dehnmessstreifen (DMS), Feldplattensensoren und Sensoren mit einer magnetooptischen Schicht.

Regelmäßig werden DMS für die Ermittlung von Drehmomenten eingesetzt. Diese sind jedoch nicht langzeitbeständig und benötigen aufwändige Telemetrie mit Energieversorgung zur Datenübertragung. Dehnmessstreifen halten anspruchsvollen Bedingungen, z. B. hohen Temperaturen, oft nicht stand. Mechanische, thermische und chemische Beanspruchung bringen herkömmliche Lösungen schnell an die Grenzen, DMS fallen ab oder liefern unzureichende Daten. Zudem ist die Signalübertragung per Telemetrie aufwendig, sehr teuer und störanfällig.

Magnetostriktive Drehmomentsensoren sind auf Grund des Messprinzips in der Regel nur für hohe Drehmomente geeignet, Leerlauf und Teillastmomente bis ca. 60 % der Maximalmomente können regelmäßig nicht erfasst werden. Anbaubare Drehmomentflansche können nur Momente am jeweiligen Abtrieb ermitteln und eignen sich somit nicht zur Motorregelung.

Jedoch ist eine Kombination der vorher genannten Sensoren mit magnetosensitiven, insbesondere magnetoresistiven und/oder magnetoelastischen, Sensoren gut möglich. Es ist jedoch ganz besonders vorteilhaft, dass die zylinderzugeordnete Ermittlung von Drehmomenten durch magnetosensitive Sensoren ausgeführt wird. Am Anfang und/oder am Ende der Kurbelwelle könnten jedoch z. B. DMS oder Drehmomentflansche angebracht sein.

In einer weiteren Weiterbildung ist vorgesehen, dass das Drehmoment der Kurbelwelle ermittelt wird auf Grundlage des Winkelversatzes (auch Twistwinkel genannt), der durch Bilden einer Differenz des vom ersten Drehwinkelsensor gemessenen ersten Drehwinkels und des vom zweiten Drehwinkelsensor gemessenen zweiten Drehwinkels ermittelt wird, abhängig von der Lage des ersten und zweiten Drehwinkelsensors, insbesondere der einzelnen Drehwinkelsensoren. Vorzugsweise wird ein erster Teil des Drehmoments einem inneren Drehmoment der Kurbelwelle auf Grund von Zündkräften einzelner Zylinder zugeordnet, und/oder es wird ein zweiter Teil des Drehmoments einem Nutzmoment zugeordnet, wobei der erste und/oder zweite Teil des Drehmoments nach einem Filter oder dergleichen nachgeschalteter Signalverarbeitung erhalten wird.

Abhängig von der Lage der einzelnen Drehwinkelsensoren kann das innere Drehmoment, auf Grund von Zündkräften einzelner Zylinder und/oder das Nutzmoment, durch geeignete Differenzbildung des Drehwinkels (Twistwinkel) mittels nachgeschalteter Signalverarbeitung, herausgefiltert werden.

Durch eine laufende Kenntnis des inneren Drehmoments und des Nutzdrehmoments kann die Motorregelung insbesondere hinsichtlich eines Beschleunigens oder Bremsens der Kolbenmaschine im laufenden Betrieb der Kolbenmaschine verbessert werden.

In einer weiteren Weiterbildung ist vorgesehen, dass mittels der Drehmomentsensorik Drehschwingungsmessungen an der Kolbenmaschine durchgeführt werden.

Drehschwingungsmessungen sind an allen Kolbenmaschinen, die mit der erfindungsgemäßen Drehmomentsensorik ausgerüstet sind, möglich, ohne dass zusätzliche Messtechnik appliziert werden muss. Dies ist insbesondere bei Prüfstandversuchen relevant oder bei Messungen im Feld im Fall von Anlagenproblemen, was in der Regel mit hohen Einzelfallkosten verbunden ist.

In einer besonders bevorzugten Weiterbildung ist vorgesehen, dass mittels der wiederholt ermittelten zylinderzugeordneten Drehmomente ein Zustand der Kolbenmaschine überwacht wird, insbesondere derart, dass eine prädiktive Wartung und/oder eine Schadensfrüherkennung durchgeführt werden kann.

Hierdurch wird eine bedarfsgerechte Wartung der Kolbenmaschine, z. B. bezüglich eines Maschinenverschleißes, möglich. Auch eine Fehlersuche bei einem Defekt der Kolbenmaschine kann verbessert und Bauteile gezielt ausgetauscht werden. Insbesondere ermöglicht eine laufende Erfassung der Leistungsdaten eine Schadensfrüherkennung, sodass zeitnah auf einen drohenden Ausfall eines Bauteils oder einer Komponente reagiert werden kann.

In einer weiteren besonders bevorzugten Weiterbildung ist vorgesehen, dass die Leistungsdaten an eine Schnittstelle zur laufenden Überwachung der übermittelt werden.

Hierbei kann die Schnittstelle eine Nutzer-Schnittstelle sein und sich in der Kolbenmaschine befinden, sodass eine interne Überwachung der Leistungsdaten durch einen Nutzer möglich ist. Die Nutzer-Schnittstelle kann sich aber auch außerhalb der Kolbenmaschine befinden, sodass eine externe Überwachung der Leistungsdaten einer oder mehrerer Kolbenmaschinen durchführbar ist. Denkbar ist auch eine softwaregesteuerte Überwachung der Leistungsdaten.

Die Erfindung betrifft weiterhin eine Kolbenmaschine, insbesondere eine Brennkraftmaschine, vorzugsweise eine Kolbenmaschine mit einer Elektromaschine, insbesondere Generator oder Motor, vorzugsweise als Hybridantrieb. Die Kolbenmaschine weist eine Anzahl Zylinder auf, sowie eine mit Grundlagern gelagerte Kurbelwelle mit einer Anzahl Kröpfungen und Wellenzapfen, welche eine Bewegung eines Kolbens in einem der Zylinder aus der Anzahl der Zylinder durch eine an einer Kröpfung der Kurbelwelle angebrachte Pleuelstange, unter Drehmomentbeaufschlagung der Kurbelwelle, in eine Drehbewegung umsetzt, unter torsionsbedingter Verformung der drehmomentbeaufschlagten Kurbelwelle, und eine der Kurbelwelle zugeordnete Drehmomentsensorik mit wenigstens einem ersten und einem zweiten Drehwinkelsensor. Der erste und der zweite Drehwinkelsensor sind Teil einer Anzahl von zueinander beabstandeten Drehwinkelsensoren und messen einen ersten und zweiten Drehwinkel an der Kurbelwelle. Der erste und zweite Drehwinkelsensor sind über einen Abstandsbereich der Kurbelwelle voneinander beabstandet, wobei der erste und zweite Drehwinkel dem Abstandsbereich der Kurbelwelle zugeordnet sind. Mittels eines Versatzrechners wird ein Winkelversatz zwischen dem ersten und zweiten Drehwinkel ermittelt, welcher aus der torsionsbedingten Verformung der drehmomentbeaufschlagten Kurbelwelle resultiert. Die Kolbenmaschine ist dadurch gekennzeichnet, dass sich der Abstandsbereich entlang der Kurbelwelle auf einen Teilbereich des Abstands zwischen den Grundlagern beschränkt, und der Teilbereich eine Untergruppe der Anzahl Kröpfungen und Wellenzapfen umfasst. Die Kolbenmaschine ist weiterhin dadurch gekennzeichnet, dass der erste und zweite Drehwinkelsensor magnetosensitive, insbesondere magnetoresistive und/oder magnetoelastische, Sensoren sind, derart, dass der Winkelversatz der Untergruppe der Anzahl Kröpfungen und Wellenzapfen zugeordnet werden kann, wobei

- der Abstandsbereich beschränkt ist auf
- wenigstens einen Wellenzapfen-Bereich, umfassend wenigstens einen Wellenzapfen zwischen einer ersten und einer zweiten Kröpfung, und/oder
- wenigstens einen Kröpfungs-Bereich, umfassend wenigstens eine Kröpfung, derart, dass
- der Winkelversatz dem wenigstens einen Wellenzapfen und/oder der wenigstens einer Kröpfung zugeordnet werden kann.

Ausführungsbeispiele der Erfindung werden nun nachfolgend anhand der Zeichnung in Bezug auf eine Kolbenmaschine mit einer Kurbelwelle beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen, wie sie in den beigefügten Ansprüchen definiert ist.

Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein, wie in den beigefügten Ansprüchen definiert.

Zudem fallen in den Rahmen der Erfindung alle Kombinationen aus zumindest zwei der in der Beschreibung, der Zeichnung und/oder den Ansprüchen offenbarten Merkmale, wie in den beigefügten Ansprüchen definiert.

Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand von schematischen Zeichnungen; diese zeigt in:

Fig. 1        eine Begriffsbestimmung der Kurbelwelle am Beispiel eines Reihenmotors;
Fig. 2        eine Begriffsbestimmung der Kurbelwelle am Beispiel eines V-Motors;
Fig. 3        eine schematische Darstellung einer Kurbelwelle mit zylinderzugeordneten Drehwinkelsensoren am Beispiel eines Reihenmotors;
Fig. 4        eine schematische Darstellung einer Kurbelwelle mit zylinderzugeordneten Drehwinkelsensoren am Beispiel eines V-Motors;
Fig. 5a, 5b   eine schematische Darstellung einer Kurbelwelle mit zwei Drehwinkelsensoren, die jeweils auf a) oder über b) einem Wellenzapfen angeordnet sind;
Fig. 6a, 6b   eine schematische Darstellung einer Kurbelwelle mit zwei Drehwinkelsensoren zwischen denen eine Kröpfung der Kurbelwelle liegt;
Fig. 7a, 7b   eine schematische Darstellung einer Kurbelwelle mit drei einer Kröpfung zugeordneten Drehwinkelsensoren;
Fig. 8        eine schematische Darstellung einer Kurbelwelle mit eingezeichneten Größen zur Berechnung des Drehmoments Mt der Kurbelwelle;
Fig. 9        eine Modelldarstellung einer Kurbelwelle mit angedeuteten Positionen der Drehwinkelsensoren,
Fig. 10       eine schematische Darstellung des Verfahrensablaufs.

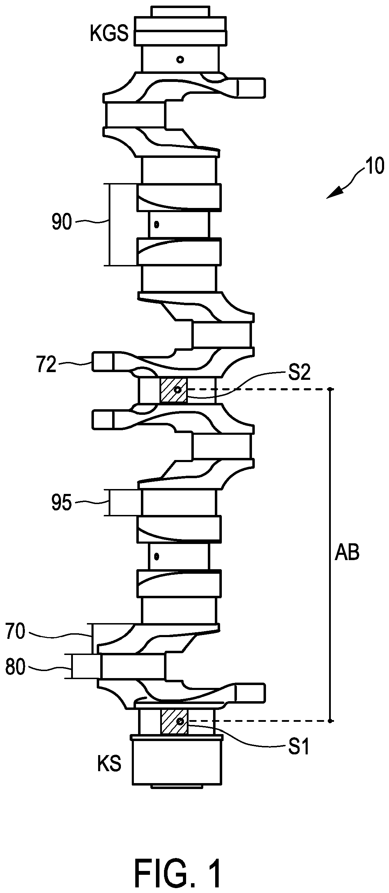

Fig. 1 zeigt eine Kurbelwelle 10 eines Reihenmotors. Die Kurbelwelle 10 ist an der Kraftseite KS und an der Kraftgegenseite KGS mit Grundlagern (nicht gezeigt) gelagert. Die Gesamtlänge der Kurbelwelle erstreckt sich somit auf den Abstand zwischen den Grundlagern (nicht gezeigt). Die Kurbelwelle 10 weist eine Anzahl Kröpfungen 90 und Wellenzapfen 95 auf. Eine Kröpfung 90 umfasst Kurbelwangen 70 und einen Kurbelzapfen 80. Weiterhin sind Gegengewichte 72 vorgesehen, um den Masseschwerpunkt der Kurbelwelle 10 bevorzugt auf die Drehachse der Kurbelwelle 10 zu verschieben. Bei einem Reihenmotor ist an jeder Kröpfung 90 jeweils ein Zylinder mittels einer Pleuelstange angebracht (nicht gezeigt). Weiterhin ist exemplarisch ein Abstandsbereich AB gezeigt, der durch den Abstand eines ersten Drehwinkelsensors S1 und eines zweiten Drehwinkelsensors S2 definiert und diesen zugeordnet wird. Der erste Drehwinkelsensor S1 und der zweite Drehwinkelsensor S2 und etwaige weitere Drehwinkelsensoren sind gemäß dem Konzept der Erfindung magnetosensitive, nämlich vorliegend magnetoresistive Drehwinkelsensoren. Es könnten im Prinzip auch magnetoelastische Drehwinkelsensoren sein. Der Abstandsbereich AB erstreckt sich entlang der Kurbelwelle 10 und ist auf einen Teilbereich des Abstands zwischen den Grundlagern beschränkt. Der Teilbereich umfasst eine Untergruppe der Anzahl Kröpfungen 90 und Wellenzapfen 95.

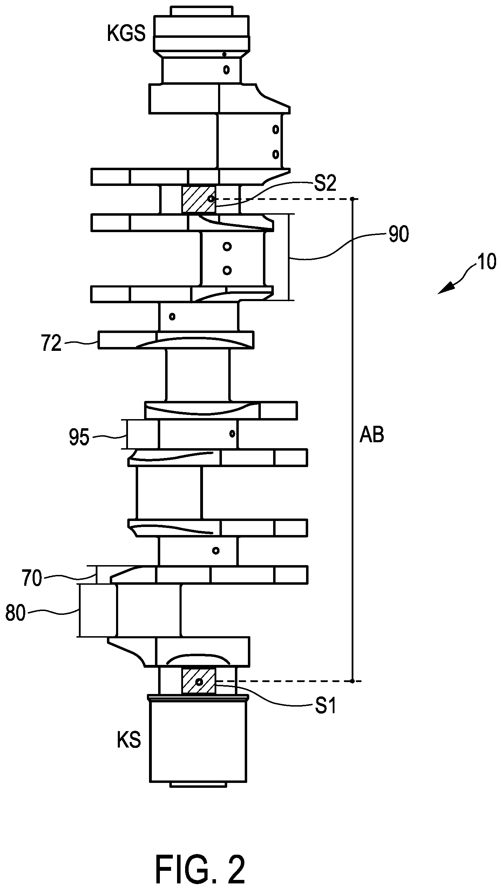

Fig. 2 zeigt eine Kurbelwelle 10 eines V-Motors. Die Kurbelwelle 10 ist an der Kraftseite KS und an der Kraftgegenseite KGS mit Grundlagern (nicht gezeigt) gelagert. Wie auch in Bezug auf Fig. 1 beschrieben, erstreckt sich die Gesamtlänge der Kurbelwelle somit auf den Abstand zwischen den Grundlagern (nicht gezeigt). Die Kurbelwelle 10 weist eine Anzahl Kröpfungen 90 und Wellenzapfen 95 auf. Eine Kröpfung 90 umfasst Kurbelwangen 70 und einen Kurbelzapfen 80. Weiterhin sind Gegengewichte 72 vorgesehen, um den Masseschwerpunkt der Kurbelwelle 10 bevorzugt auf die Drehachse der Kurbelwelle 10 zu verschieben. Bei einem V-Motor sind an jeder Kröpfung 90 jeweils zwei Zylinder mittels einer Pleuelstange angebracht (nicht gezeigt). Weiterhin ist exemplarisch ein Abstandsbereich AB gezeigt, der durch den Abstand eines ersten Drehwinkelsensors S1 und eines zweiten Drehwinkelsensors S2 definiert und diesen zugeordnet wird. Der erste Drehwinkelsensor S1 und der zweite Drehwinkelsensor S2 und etwaige andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein. Der Abstandsbereich AB erstreckt sich entlang der Kurbelwelle 10 und ist auf einen Teilbereich des Abstands zwischen den Grundlagern beschränkt. Der Teilbereich umfasst eine Untergruppe der Anzahl Kröpfungen 90 und Wellenzapfen 95.

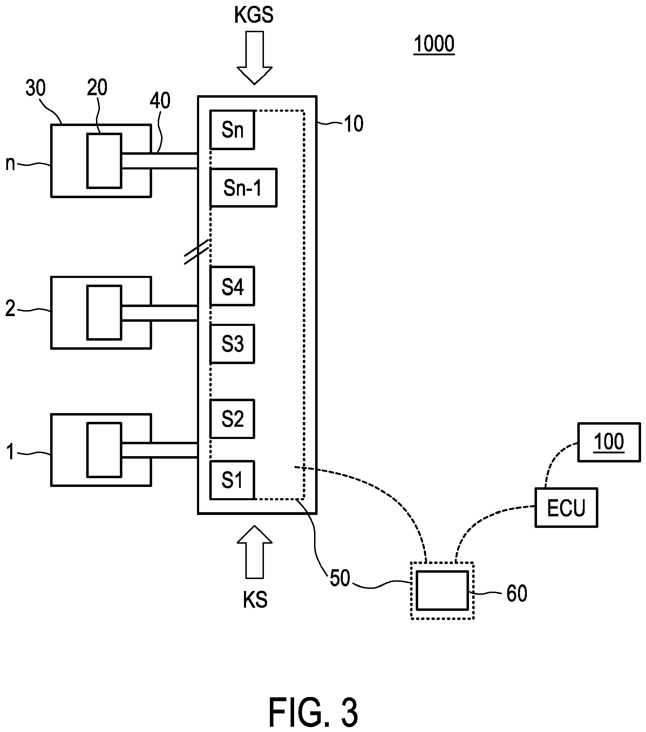

In Fig. 3 ist eine schematische Darstellung einer Kolbenmaschine 1000 in Reihenanordnung mit einer Kurbelwelle 10 gezeigt. Die Kraftseite ist hierbei mit KS bezeichnet und KGS entspricht der Kraftgegenseite des Motors. Auf der einen Motorseite befindet sich eine Anzahl von Zylindern (1-n). In jedem einzelnen Zylinder 30 bewegt sich ein Kolben 20, der mittels einer Pleuelstange 40 die Kurbelwelle 10 in eine Drehbewegung versetzt. Die Kolbenmaschine weist weiterhin eine Drehmomentsensorik 50 mit einer Anzahl von zylinderzugeordneten Drehwinkelsensoren, S1, S2, ..., Sn, auf. Hierbei sind insbesondere zwei Drehwinkelsensoren jeweils einem Zylinder zugeordnet. Diese messen die torsionsbedingte Belastung der drehmomentbeaufschlagten Kurbelwelle 10 im Betrieb der Kolbenmaschine 1000 und übermitteln zylinderzugeordnete Drehwinkel an einen Versatzrechner 60, der aus einem Winkelversatz zwischen den beiden Drehwinkeln zylinderzugeordnete Drehmomente errechnet. Der erste Drehwinkelsensors S1 und der zweite Drehwinkelsensor S2 und die anderen Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein. Auf Grundlage der errechneten Drehmomente steuert und regelt das Motorsteuergerät (ECU) die Kolbenmaschine 1000. Die Übermittlung der zylinderindividuellen Drehwinkel an den Versatzrechner 60 ist durch eine gestrichelte Linie dargestellt. Vorteilhaft ist auch eine Übermittlung der zylinderindividuellen Drehmomente an das symbolisch dargestellte Motorsteuergerät (ECU) vorgesehen, sodass eine auf den zylinderindividuellen Drehmomenten basierende Regelung des Motors 100 erfolgen kann.

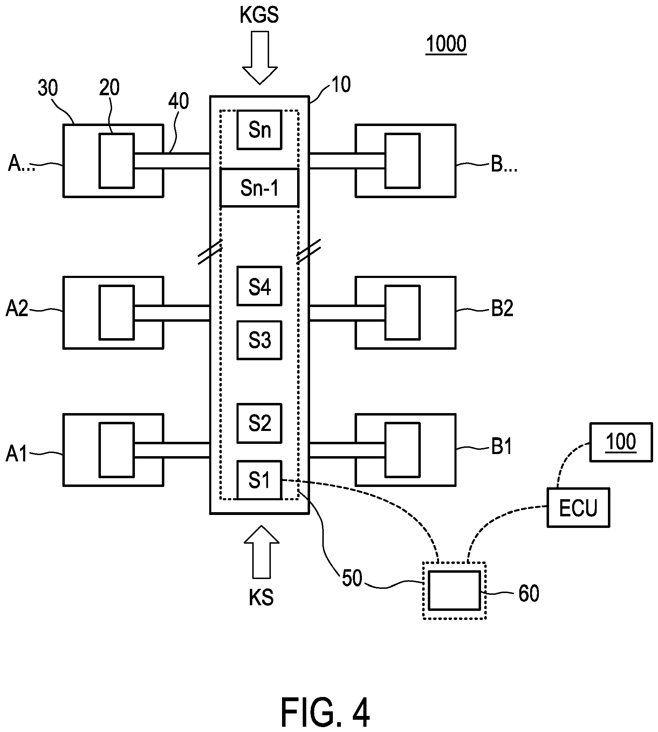

In Fig. 4 ist schematische Darstellung einer Kolbenmaschine 1000 in V-Anordnung mit einer Kurbelwelle 10 gezeigt. Die Kraftseite ist hierbei mit KS bezeichnet und KGS entspricht der Kraftgegenseite des Motors. Auf der linken Motorseite befindet sich eine Anzahl von Zylindern A1- An und B1- Bn bezeichnet eine Anzahl von Zylindern auf der rechten Motorseite. In jedem einzelnen Zylinder 30 bewegt sich ein Kolben 20, der mittels einer Pleuelstange 40 die Kurbelwelle 10 in eine Drehbewegung versetzt. Die Brennkraftmaschine weist weiterhin eine Drehmomentsensorik 50 mit einer Anzahl von einer Kröpfung zugeordneten Drehwinkelsensoren, S1, S2, ..., Sn, auf. Hierbei sind insbesondere zwei Drehwinkelsensoren jeweils einer Kröpfung zugeordnet. Der erste Drehwinkelsensors S1 und der zweite Drehwinkelsensor S2 und die anderen Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein. Da über Pleuelstangen jeweils zwei Kolben an einer Kröpfung angebracht sind, sind einer Kröpfung zugeordnete Drehwinkelsensoren entsprechend zwei Zylindern zugeordnet. Die Drehwinkelsensoren messen die torsionsbedingte Belastung der drehmomentbeaufschlagten Kurbelwelle 10 im Betrieb der Kolbenmaschine 1000 und übermitteln einer jeweiligen Kröpfung zugeordnete Drehwinkel an einen Versatzrechner 60, der aus einem Winkelversatz zwischen den beiden Drehwinkeln ein einer jeweiligen Kröpfung zugeordnetes Drehmoment errechnet. Auf Grundlage der errechneten Drehmomente steuert und regelt das Motorsteuergerät (ECU) die Kolbenmaschine 1000. Die Übermittlung der kröpfungsindividuellen Drehwinkel an den Versatzrechner 60 ist durch eine gestrichelte Linie dargestellt. Entsprechend ist die Übermittlung der kröpfungsindividuellen Drehmomente an das symbolisch dargestellte Motorsteuergerät (ECU) vorgesehen, sodass eine auf den kröpfungsindividuellen Drehmomenten basierende Regelung des Motors 100 erfolgen kann.

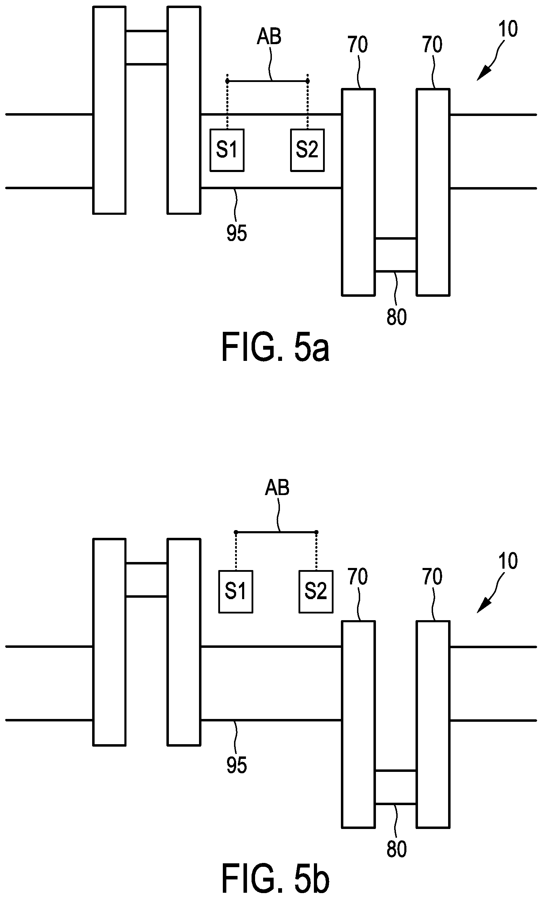

In Fig. 5a und Fig. 5b sind schematische Darstellungen einer Kurbelwelle 10 gezeigt. Zwischen den Kröpfungen aus zwei Kurbelwangen 70 und einem Kurbelzapfen 80 liegt jeweils ein Wellenzapfen 95 der Kurbelwelle 10. Auf den Wellenzapfen sind in Fig. 5a zwei Drehwinkelsensoren S1 und S2 in Kontakt mit der Kurbelwelle 10 in einem Abstandsbereich AB zueinander beabstandet angeordnet, um aus einer torsionsbedingten Verformung der Kurbelwelle 10 einen Winkelversatz zu messen. In Fig. 5b ist angedeutet, dass auch eine kontaktlose Abtastung der Kurbelwelle 10 vorgesehen ist, indem die Drehwinkelsensoren, S1, S2, in einem Abstand über der Kurbelwelle in einem Abstandsbereich AB zueinander beabstandet angebracht sind. Der erste Drehwinkelsensors S1 und der zweite Drehwinkelsensor S2 und etwaige andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein.

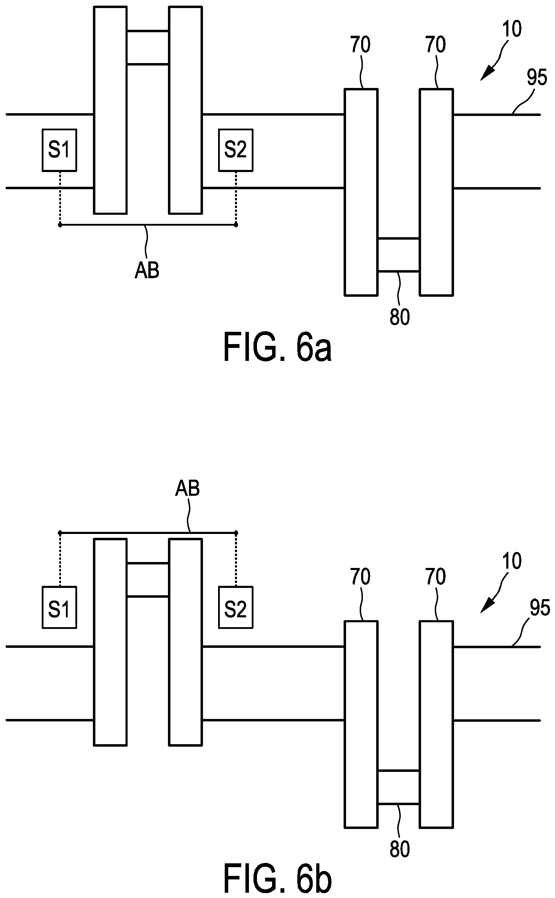

In Fig. 6a und Fig. 6b sind schematische Darstellungen einer Kurbelwelle 10 gezeigt. Vor und hinter einer Kröpfung bestehend aus zwei Kurbelwangen 70 und einem Kurbelzapfen ist jeweils einer der Drehwinkelsensoren S1 und S2 angebracht. In Fig. 6a sind die Drehwinkelsensoren S1 und S2 in Kontakt mit der Kurbelwelle 10 in einem Abstandsbereich AB zueinander beabstandet angeordnet, um aus einer torsionsbedingten Verformung der Kurbelwelle 10 einen Winkelversatz zu messen. In Fig. 6b ist angedeutet, dass auch eine kontaktlose Abtastung der Kurbelwelle 10 vorgesehen ist, indem die Drehwinkelsensoren, S1, S2, in einem Abstand über der Kurbelwelle in einem Abstandsbereich AB zueinander beabstandet angebracht sind. Einer der entsprechenden Drehwinkelsensoren, S1, S2 ist in einem Abstand über der Kurbelwelle vor einer Kröpfung und der andere hinter der Kröpfung angeordnet. Der erste Drehwinkelsensors S1 und der zweite Drehwinkelsensor S2 und etwaige andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein.

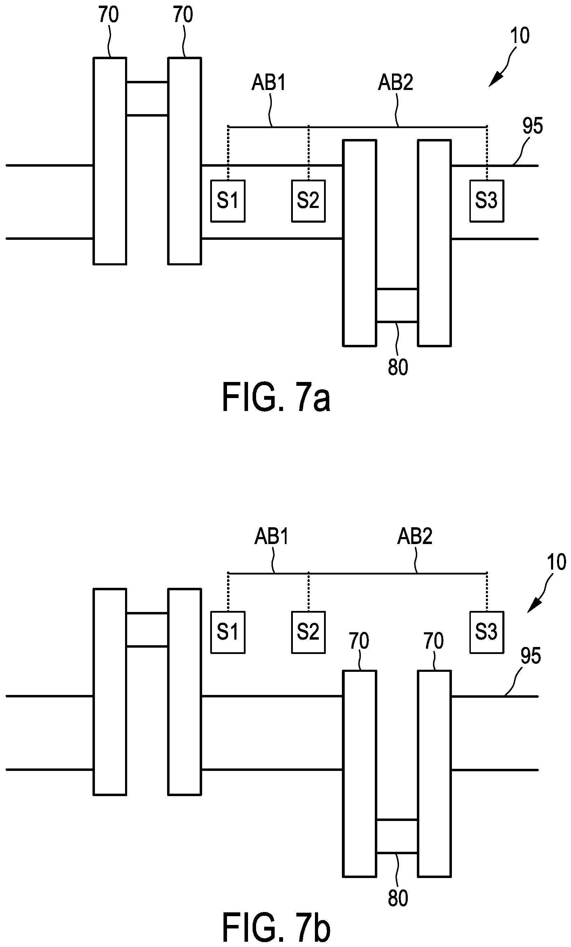

In Fig. 7a und Fig. 7b sind schematische Darstellungen einer Kurbelwelle 10 gezeigt. In Fig. 7a ist angedeutet, dass mehrere Drehwinkelsensoren S1, S2, und S3 einer Kröpfung zugeordnet werden können. Jeder der Drehwinkelsensoren S1, S2 und S3 misst einen Drehwinkel. Die Drehwinkel der Sensoren S1 und S2 werden dem Abstandsbereich AB1 zugeordnet und die Drehwinkel der Sensoren S2 und S3 werden dem Abstandsbereich AB2 zugeordnet. Die Abstandsbereiche AB1 und AB2 können derselben Kröpfung zugeordnet werden um ein kröpfungsindividuelles Drehmoment zu ermitteln. Der Drehwinkel des Sensors S2 wird also zwei Abstandsbereichen zugeordnet. Der Drehmomentermittlung kann zum Beispiel ein Mittelwert zugrunden gelegt werden, der aus den jeweiligen Winkelversätzen der Abstandsbereiche AB1 und AB2 gebildet wird. In Fig. 7b ist gezeigt, dass dieselbe Drehwinkelanordnung auch in einem Abstand zu der Kurbelwelle 10 angeordnet sein kann, um kontaktlos einen Drehwinkel der Kurbelwelle 10 zu ermitteln. Der erste Drehwinkelsensor S1 und der zweite Drehwinkelsensor S2 und etwaige andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein.

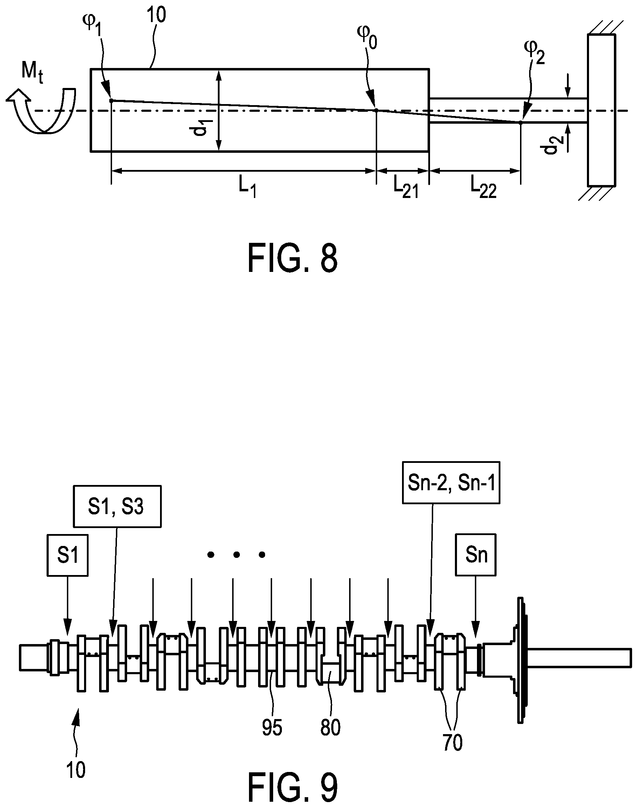

In Fig. 8 ist eine schematische Darstellung einer Kurbelwelle 10 mit eingezeichneten Größen zur Berechnung des Drehmoments Mt der Kurbelwelle gezeigt. Dieses ergibt sich aus

$$M_t = (\varphi_1 - \varphi_0) \times (G \times I_{t1}) / L_1 = (\varphi_2 - \varphi_0) \times G \times ( (I_{t1} / L_{21}) + (I_{t2} / L_{22}) ) ,$$

wobei G das Schubmodul des Wellenwerkstoffs ist und die Differenzbildung der Drehwinkel $(\varphi_1 - \varphi_0)$ und $(\varphi_2 - \varphi_0)$, abhängig von der Lage der Sensoren, eine Berechnung des inneren Drehmoments oder des Nutzmoments mittels nachgeschalteter Signalverarbeitung ermöglicht. Für die Kurbelwelle und die Anordnung charakteristische Längen sind mit $L_1$, $L_{21}$ und $L_{22}$ angegeben. Das Torsionsträgheitsmoment des Wellenquerschnitts, $I_t$, ergibt sich für die unterschiedlichen Dicken $d_1$ und $d_2$ der Kurbelwelle mittels $I_{t1} = \pi\, d_1 / 32$ und $I_{t2} = \pi\, d_2 / 32$.

In Fig. 9 ist ein Modell einer Kurbelwelle 10 gezeigt. Die senkrechten Pfeile deuten auf Wellenzapfen 95 der Kurbelwelle zwischen den Kröpfungen, welche aus den beiden Kurbelwangen 70 und dem Kurbelzapfen 80 bestehen. Vorteilhafterweise können an diesen Stellen in Kontakt mit der Kurbelwelle oder kontaktlos in einem Abstand zu der Kurbelwelle jeweils zwei GMR-Sensoren S1 und S2 aus der Anzahl der Drehwinkelsensoren, S1, S2, ... Sn, jeweils vor und hinter einer Kröpfung angebracht und dieser zugeordnet werden. Der erste Drehwinkelsensor S1 und der zweite Drehwinkelsensor S2 und andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein.

Zum Beispiel sind die Drehwinkelsensoren S1 und S2 einer Kröpfung zugeordnet, die Drehwinkelsensoren S3 und S4 einer Kröpfung zugeordnet, usw. Diese können dann einen Winkelversatz für den zugeordneten Abstandsbereich ermitteln, aus dem dann durch den Versatzrechner kröpfungsindividuelle Drehmomente errechnet werden können. Am Anfang und/oder am Ende der Kurbelwelle können auch zum Beispiel zusätzlich alternative Sensoren, wie z. B. Drehmomentflansche, magnetostriktive Sensoren oder Dehnmessstreifen angebracht werden.

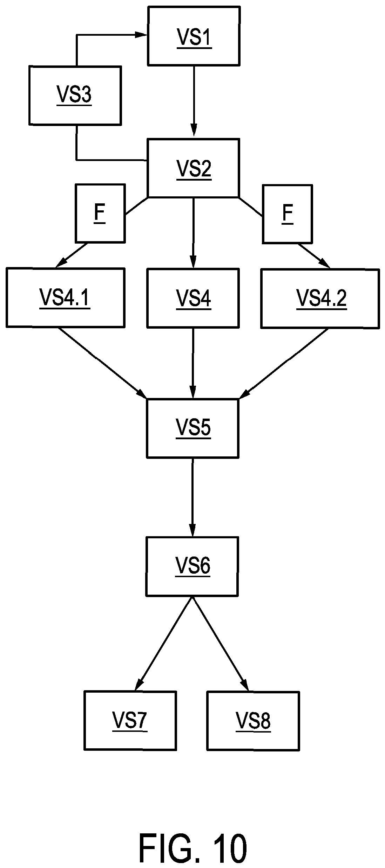

In Fig. 10 ist eine schematische Darstellung des Verfahrensablaufs dargestellt. Die torsionsbedingte Verformung der Kurbelwelle im Betrieb der Kolbenmaschine wird zunächst mittels Drehwinkelsensoren durch Messung eines Winkelversatzes erfasst, VS1. Die Drehwinkelsensoren sind in Kontakt mit der Kurbelwelle oder kontaktlos über der Kurbelwelle so angeordnet und derart beabstandet, dass zwischen ihnen ein Abstandsbereich der drehmomentbeaufschlagten Kurbelwelle liegt. Insbesondere sind jeweils mindestens ein erster und ein zweiter Drehwinkelsensor aus der Anzahl der Drehwinkelsensoren der Drehmomentsensorik einer Kröpfung der Kurbelwelle zugeordnet, um einen kröpfungszugeordneten Winkelversatz zu messen. Dadurch wird eine Erfassung einer Torsionsverteilung entlang der Kurbelwelle ermöglicht. Der Winkelversatz wird dann an den Versatzrechner übermittelt VS2. Der Schritt des Messens eines kröpfungszugeordneten Winkelversatzes und dessen Übermittlung an den Versatzrechner wird laufend widerholt VS3 und soll insbesondere mindestens einmal pro Arbeitszyklus des Zylinders erfolgen. Aus dem kröpfungszugeordneten Winkelversatz wird nun durch den Versatzrechner ein kröpfungszugeordnetes Drehmoment errechnet VS4.

Es wird also das Drehmoment der Kurbelwelle auf Grundlage des gemessenen Winkelversatzes ermittelt, der durch Bilden der Differenz des vom ersten Drehwinkelsensor gemessenen ersten Drehwinkels und des vom zweiten Drehwinkelsensor gemessenen zweiten Drehwinkels ermittelt wird. Der erste Drehwinkelsensor S1 und der zweite Drehwinkelsensor S2 und etwaige andere Drehwinkelsensoren sind hier gemäß dem Konzept der Erfindung magnetosensitive, nämlich magnetoresistive Drehwinkelsensoren. Es könnten im Prinzip auch magnetoelastische Drehwinkelsensoren sein.

Abhängig von der Lage des ersten und zweiten Drehwinkelsensors, insbesondere der einzelnen Drehwinkelsensoren, kann ein inneres Drehmoment und/oder ein Nutzmoment herausgefiltert werden.

Insbesondere wird in VS4.1 ein erster Teil des Drehmoments einem inneren Drehmoment der Kurbelwelle auf Grund von Zündkräften einzelner Zylinder oder Zylinderpaare zugeordnet, und/oder in VS4.2 ein zweiter Teil des Drehmoments einem Nutzmoment zugeordnet, wobei der erste und/oder zweite Teil des Drehmoments nach einem Filter F oder dergleichen nachgeschalteter Signalverarbeitung erhalten wird.

Das Drehmoment und/oder das innere Drehmoment und/oder das Nutzmoment werden dann in VS5 als Eingangsgrößen zur Motorregelung an das Motorsteuergerät (ECU) übergeben.

Somit wird eine laufende Erfassung von Leistungsdaten ermöglicht VS6 und kann zum Beispiel für eine laufende Überwachung eines Zustands der Kolbenmaschine genutzt werden, VS7. Hiermit werden eine Schadensfrüherkennung sowie eine prädiktive Wartung der Kolbenmaschine ermöglicht. Weiterhin kann die laufende Erfassung von Leistungsdaten für Regelaufgaben genutzt werden, VS8. Dies ermöglicht insbesondere eine verbesserte Regelung der Einspritzmenge, was vorteilhafterweise die Schadstoffemissionen der Kolbenmaschine verringert und somit Emissionsgrenzwerte dauerhaft eingehalten werden können.

BEZUGSZEICHENLISTE

| | |
|---|---|
| 1000 | Kolbenmaschine |
| 10 | Kurbelwelle |
| 20 | Kolben |
| 30 | Zylinder |
| 40 | Pleuelstangen |
| 50 | Drehmomentsensorik |
| 60 | Versatzrechner |
| 70 | Kurbelwange |
| 75 | Gegengewicht |
| 80 | Kurbelzapfen |
| 90 | Kröpfung |
| 95 | Wellenzapfen |
| 100 | Motor |
| AB | Abstandsbereich |
| ECU | Motorsteuergerät |
| A1 - An | Zylinder der linken Motorseite |
| B1 - Bn | Zylinder der linken Motorseite |
| AS | An-/Abtriebsseite |
| F | Filter |
| KS | Kraftseite |
| KGS | Kraftgegenseite |
| VS1 | Verfahrensschritt 1 |
| VS2 | Verfahrensschritt 2 |
| VS3 | Verfahrensschritt 3 |
| VS4 | Verfahrensschritt 4 |
| VS4.1 | Verfahrensschritt 4.1 |

| VS4.2 | Verfahrensschritt 4.2 |
| VS5 | Verfahrensschritt 5 |
| VS6 | Verfahrensschritt 6 |
| VS7 | Verfahrensschritt 7 |
| VS8 | Verfahrensschritt 8 |
| $M_t$ | Drehmoment |
| $\varphi_{0,1,2}$ | Drehwinkel |
| $L_{1,21,22}$ | Längen entlang der Kurbelwelle |
| $d_{1,2}$ | Dicken der Kurbelwelle |
| G | Schubmodul des Werkstoffs |
| $I_{t, t1, t2}$ | Torsionsträgheitsmoment des Wellenquerschnitts |
| S1, S2, S3... Sn | magnetosensitive, insbesondere magnetoresistive und/oder magnetoelastische Drehwinkelsensoren |

**Patentansprüche**

1. Verfahren zum Betreiben einer Kolbenmaschine (1000), insbesondere einer Brennkraftmaschine, wobei

- die Kolbenmaschine (1000)
- eine Anzahl Zylinder (A1- An, B1- Bn) aufweist, sowie
- eine mit Lagerzapfen in Grundlagern gelagerte Kurbelwelle (10) aufweist, die weiter zwischen den Lagerzapfen eine Anzahl von Kröpfungen und Wellenzapfen in abwechselnder Abfolge aufweist, wobei

- die Kurbelwelle (10) eine Bewegung wenigstens eines Kolbens (20) in einem Zylinder (30) der Anzahl Zylinder (A1- An, B1- Bn) unter Lastaufnahme durch eine an einer der Kröpfungen der Kurbelwelle (10) angebrachte wenigstens eine Pleuelstange (40) in eine Drehbewegung umsetzt, und
- die Kurbelwelle durch die Lastaufnahme eine Torsion bewirkende Verformung und/oder Verspannung erfährt, und

- die Kolbenmaschine (1000) weiter eine der Kurbelwelle (10) zugeordnete Drehmomentsensorik (50) mit wenigstens einem ersten und einem zweiten Drehwinkelsensor (S1, S2) aufweist, wobei in dem Verfahren
- der erste und der zweite Drehwinkelsensor (S1, S2) magnetosensitive Sensoren sind und Teil einer Anzahl von zueinander beabstandeten Drehwinkelsensoren (S1, S2, ..., Sn) sind und einen ersten und zweiten Drehwinkel der Torsion unmittelbar der Kurbelwelle (10) derart messen, dass der erste (S1) und zweite (S2) Drehwinkelsensor über einen Abstandsbereich (AB) der Kurbelwelle (10) voneinander beabstandet sind, wobei der erste und zweite Drehwinkel in dem Abstandsbereich (AB) gemessen werden, und
- ein Winkelversatz zwischen dem ersten und zweiten Drehwinkel (S1, S2) ermittelt wird, welcher aus der Torsion der lastbeaufschlagten Kurbelwelle (10) resultiert,
**dadurch gekennzeichnet, dass**
- sich der Abstandsbereich (AB) zwischen dem ersten (S1) und zweiten (S2) Drehwinkelsensor entlang der Kurbelwelle (10) auf einen Teilbereich des Abstands zwischen den Lagerzapfen beschränkt, und
- der Teilbereich eine Untergruppe der Anzahl Kröpfungen und/oder Wellenzapfen umfasst, sodass der Winkelversatz der Untergruppe der Anzahl Kröpfungen und Wellenzapfen zuzuordnen ist, wobei
- der Abstandsbereich (AB) beschränkt ist auf

- wenigstens einen Wellenzapfen-Bereich, umfassend wenigstens einen Wellenzapfen (95) zwischen einer ersten und einer zweiten Kröpfung, und/oder
- wenigstens einen Kröpfungs-Bereich, umfassend wenigstens eine Kröpfung (90), derart, dass
- der Winkelversatz dem wenigstens einen Wellenzapfen und/oder der wenigstens einer Kröpfung (90) zugeordnet werden kann.

2. Verfahren nach Anspruch 1, **dadurch gekennzeichnet, dass** der Winkelversatz zwischen dem ersten und zweiten Drehwinkel (S1, S2) ermittelt wird, insbesondere mittels eines Versatzrechners (60), derart, dass ein dem Abstandsbereich (AB) zugeordnetes, aus dem gemessenen ersten und zweiten Drehwinkel resultierendes Drehmoment ermittelbar ist, wobei das dem Abstandsbereich (AB) zugeordnete Drehmoment im laufenden Betrieb der Kolbenmaschine (1000) ermittelt wird, insbesondere das dem Abstandsbereich zugeordnete Drehmoment im laufenden Betrieb wiederholt ermittelt wird.

3.  Verfahren nach Anspruch 1 oder 2, **dadurch gekennzeichnet, dass** der Abstandsbereich (AB) beschränkt ist auf

    - einen Wellenzapfen-Einzelbereich umfassend einen einzigen Wellenzapfen (95) zwischen einer ersten und einer zweiten Kröpfung und/oder
    - einen Kröpfungs-Einzelbereich umfassend eine einzige Kröpfung, derart, dass
    - der Winkelversatz dem einzigen Wellenzapfen (95) und/oder der einzigen Kröpfung zugeordnet werden kann.

4.  Verfahren nach wenigstens einem der vorherigen Ansprüche, **dadurch gekennzeichnet, dass** die Anzahl von zueinander beabstandeten Drehwinkelsensoren (S1, S2, ..., Sn) eine Mehrzahl von Paaren erster (S1) und zweiter (S2) Drehwinkelsensoren zwischen den Grundlagern umfasst, wobei die Drehwinkelsensoren der Paare jeweils über einen Einzelbereich, insbesondere Wellenzapfen-Einzelbereich und/oder Kröpfungs-Einzelbereich, der Kurbelwelle (10) voneinander beabstandet sind.

5.  Verfahren nach wenigstens einem der vorherigen Ansprüche, **dadurch gekennzeichnet, dass** dem Abstandsbereich (AB) zugeordnete Drehmoment im laufenden Betrieb wiederholt ermittelt wird und zum wiederholten Ermitteln des dem Abstandsbereich (AB) der Kurbelwelle (10) zugeordneten Drehmoments eine torsionsbedingte Belastung der Kurbelwelle (10) wenigstens einmal pro Arbeitszyklus eines Zylinders (30) laufend erfasst wird.

6.  Verfahren nach wenigstens einem der vorherigen Ansprüche, **dadurch gekennzeichnet, dass** durch ein wiederholtes Ermitteln eines dem Abstandsbereich (AB) zugeordneten Drehmoments, mittels eines Motorsteuergeräts (ECU), eine laufende Regelung und/oder Überwachung der Brennstoffinjektion erfolgt, insbesondere derart, dass ein Nutzdrehmoment ermittelt wird.

7.  Verfahren nach wenigstens einem der vorherigen Ansprüche, **dadurch gekennzeichnet, dass** eine Brennstoffinjektion mittels einer Regelung und/oder Überwachung erfolgt für denjenigen Zylinder, der mittels einer Pleuelstange (40) an eine Kröpfung angebracht ist, die in dem Abstandsbereich (AB) umfasst ist oder die an den Abstandsbereich (AB) angrenzt, insbesondere zur Verringerung der Schadstoffemissionen der Kolbenmaschine (1000) und/oder zur dauerhaften Einhaltung von Emissionsgrenzwerten.

8.  Verfahren nach wenigstens einem der vorherigen Ansprüche, **dadurch gekennzeichnet, dass** über wiederholte Drehmomentmessungen im laufenden Betrieb der Kolbenmaschine (1000) ein dem Abstandsbereich zugeordnetes Drehmoment bei Drehzahlen oberhalb von 2000U/min, insbesondere oberhalb 6000U/min, erfasst wird.

9.  Verfahren nach wenigstens einem der vorherigen Ansprüche, **dadurch gekennzeichnet, dass** wenigstens die dem Abstandsbereich (AB) zugeordneten Drehwinkelsensoren (S1, S2) ohne Kontakt mit der Kurbelwelle (10) sind, derart, dass eine kontaktlose Ermittlung von den dem Abstandsbereich zugeordneten Drehwinkeln erfolgt.

10. Verfahren nach wenigstens einem der vorherigen Ansprüche, **dadurch gekennzeichnet, dass**

    - der wenigstens ein magnetosensitive Sensor
    ein magnetoresistiver Sensor ausgewählt ist aus der Gruppe von Sensoren umfassend: ein AMR- Sensor, ein Hall- Sensor, ein GMR-Sensor, und/oder
    - ein magnetoelastischer Sensor ausgewählt ist aus der Gruppe von Sensoren umfassend: einen magnetostriktiven Sensor und einen invers-magnetostriktiven Sensor, und/oder
    - die Drehmomentsensorik (50) einen oder mehrere Sensoren aufweist aus der Gruppe umfassend: einen Drehmomentflansch, einen Dehnungsmessstreifen, einen Feldplattensensor, einen Sensor mit einer magnetooptischen Schicht.

11. Verfahren nach wenigstens einem der vorherigen Ansprüche, **dadurch gekennzeichnet, dass** das Drehmoment der Kurbelwelle (10) ermittelt wird auf Grundlage des Winkelversatzes, welcher durch Bilden einer Differenz des vom ersten Drehwinkelsensor (S1) gemessenen ersten Drehwinkels und des vom zweiten Drehwinkelsensor (S2) gemessenen zweiten Drehwinkels ermittelt wird, insbesondere abhängig von der Lage des ersten und zweiten Drehwinkelsensors, insbesondere der einzelnen weiteren Drehwinkelsensoren.

12. Verfahren nach wenigstens einem der vorherigen Ansprüche, **dadurch gekennzeichnet, dass**

- ein erster Teil des Drehmoments einem inneren Drehmoment der Kurbelwelle (10) zugeordnet wird, und/oder
- ein zweiter Teil des Drehmoments einem Nutzdrehmoment zugeordnet wird.

13. Verfahren nach wenigstens einem der vorherigen Ansprüche, **dadurch gekennzeichnet, dass** das Drehmoment mittels einem Filter (F) oder dergleichen nachgeschalteter Signalverarbeitung einem ersten und/oder zweiten Teil des Drehmoments zugeordnet wird, wobei

- der erste Teil des Drehmoments, insbesondere das innere Drehmoment, für ein Monitoring bzw. eine Schadensfrüherkennung verwendet wird, und/oder wobei
- der zweite Teil des Drehmoments, insbesondere das Nutz-Drehmoment, für eine Motor-Regelung verwendet wird.

14. Verfahren nach wenigstens einem der vorherigen Ansprüche, **dadurch gekennzeichnet, dass**

- mittels der Drehmomentsensorik (50) Drehschwingungsmessungen an der Kolbenmaschine (1000) durchgeführt werden, und/oder
- Leistungsdaten an eine Schnittstelle zur laufenden Überwachung der Kolbenmaschine (1000) übermittelt werden.

15. Kolbenmaschine (1000), insbesondere eine Brennkraftmaschine, vorzugsweise eine Kolbenmaschine mit einer Elektromaschine, insbesondere Generator und/oder Motor (100), vorzugsweise als Hybridantrieb, wobei die Kolbenmaschine (1000)

- eine Anzahl Zylinder (A1- An, B1- Bn) aufweist, sowie
- eine mit Lagerzapfen in Grundlagern gelagerte Kurbelwelle (10) aufweist, die weiter zwischen den Lagerzapfen eine Anzahl von Kröpfungen und Wellenzapfen in abwechselnder Abfolge aufweist, wobei

- die Kurbelwelle (10) eine Bewegung wenigstens eines Kolbens (20) in einem Zylinder (30) der Anzahl Zylinder (A1- An, B1- Bn) unter Lastaufnahme durch eine an einer der Kröpfungen der Kurbelwelle (10) angebrachte wenigstens eine Pleuelstange (40) in eine Drehbewegung umsetzt, und
- die Kurbelwelle (10) durch die Lastaufnahme eine Torsion bewirkende Verformung und/oder Verspannung erfährt, und

- die Kolbenmaschine (1000) weiter eine der Kurbelwelle (10) zugeordnete Drehmomentsensorik (50) mit wenigstens einem ersten und einem zweiten Drehwinkelsensor (S1, S2) aufweist, wobei
- der erste und der zweite Drehwinkelsensor (S1, S2) magnetosensitive Sensoren sind und Teil einer Anzahl von zueinander beabstandeten Drehwinkelsensoren (S1, S2, ..., Sn) sind und damit ein erster und zweiter Drehwinkel der Torsion unmittelbar der Kurbelwelle (10) derart messbar ist, dass der erste (S1) und zweite (S2) Drehwinkelsensor über einen Abstandsbereich (AB) der Kurbelwelle voneinander beabstandet sind, wobei der erste und zweite Drehwinkel in dem Abstandsbereich (AB) messbar sind, und
- mittels eines Versatzrechners (60) ein Winkelversatz zwischen dem ersten und zweiten Drehwinkel (S1, S2) ermittelbar ist, welcher aus der Torsion der lastbeaufschlagten Kurbelwelle (10) resultiert,
**dadurch gekennzeichnet, dass**
- sich der Abstandsbereich (AB) zwischen dem ersten (S1) und zweiten (S2) Drehwinkelsensor entlang der Kurbelwelle (10) auf einen Teilbereich des Abstands zwischen den Lagerzapfen beschränkt, und
- der Teilbereich eine Untergruppe der Anzahl Kröpfungen und/oder Wellenzapfen umfasst, sodass der Winkelversatz der Untergruppe der Anzahl Kröpfungen und Wellenzapfen zuzuordnen ist, wobei
- der Abstandsbereich (AB) beschränkt ist auf

- wenigstens einen Wellenzapfen-Bereich, umfassend wenigstens einen Wellenzapfen (95) zwischen einer ersten und einer zweiten Kröpfung, und/oder
- wenigstens einen Kröpfungs-Bereich, umfassend wenigstens eine Kröpfung (90), derart, dass
- der Winkelversatz dem wenigstens einen Wellenzapfen und/oder der wenigstens einer Kröpfung (90) zugeordnet werden kann.

**Claims**

1. A method for operating a piston engine (1000), in particular an internal combustion engine, wherein

   - the piston engine (1000) has
   - a number of cylinders (A1 - An, B1 - Bn), and
   - a crankshaft (10) mounted using bearing journals in main bearings, which furthermore has a number of cranks and shaft journals in alternating sequence between the bearing journals, wherein
   - the crankshaft (10) converts a movement of at least one piston (20) in a cylinder (30) of the number of cylinders (A1 - An, B1 - Bn) with load absorption by at least one connecting rod (40) attached to one of the cranks of the crankshaft (10) into a rotational movement, and
   - the crankshaft experiences a deformation and/or tension causing torsion due to the load absorption, and
   - the piston engine (1000) furthermore has a torque sensor system (50), assigned to the crankshaft (10), having at least one first and one second rotational angle sensor (S1, S2), wherein
   in the method
   - the first and the second rotational angle sensor (S1, S2) are magnetosensitive sensors and are part of a number of rotational angle sensors (S1, S2,..., Sn) spaced apart from one another and measure a first and a second rotational angle of the torsion directly from the crankshaft (10) in such a way that the first (S1) and second (S2) rotational angle sensor are spaced apart from one another over a distance range (AB) of the crankshaft (10), wherein
   the first and second rotational angle are measured in the distance range (AB), and
   - an angular offset between the first and second rotational angle (S1, S2) is determined, which results from the torsion of the load-subjected crankshaft (10),
   **characterized in that**
   - the distance range (AB) between the first (S1) and second (S2) rotational angle sensor along the crankshaft (10) is restricted to a partial range of the distance between the bearing journals, and
   - the partial range comprises a subgroup of the number of cranks and/or shaft journals, so that the angular offset is to be assigned to the subgroup of the number of cranks and shaft journals, wherein
   - the distance range (AB) is restricted to
   - at least one shaft journal range, comprising
   at least one shaft journal (95) between a first and a second crank, and/or
   - at least one crank range, comprising at least one crank (90), such that
   - the angular offset can be assigned to the at least one shaft journal and/or the at least one crank (90).

2. The method according to claim 1, **characterized in that** the angular offset between the first and second rotational angle (S1, S2) is determined, in particular by means of an offset computer (60), such that a torque, which is assigned to the distance range (AB) and results from the measured first and second rotational angles, is determinable, wherein the torque assigned to the distance range (AB) is determined in ongoing operation of the piston engine (1000), in particular the torque assigned to the distance range is determined repeatedly in ongoing operation.

3. The method according to claim 1 or 2, **characterized in that** the distance range (AB) is restricted to

   - a shaft journal single range comprising a single shaft journal (95) between a first and a second crank and/or
   - a crank single range comprising a single crank, such that
   - the angle offset can be assigned to the single shaft journal (95) and/or the single crank.

4. The method according to at least one of the preceding claims, **characterized in that** the number of rotational angle sensors (S1, S2,..., Sn) spaced apart from one another comprises a plurality of pairs of first (S1) and second (S2) rotational angle sensors between the main bearings, wherein the rotational angle sensors of the pairs are each spaced apart from one another via a single range, in particular shaft journal single range and/or crank single range, of the crankshaft (10).

5. The method according to at least one of the preceding claims, **characterized in that** the torque assigned to the distance range (AB) is determined repeatedly in ongoing operation and for the repeated determination of the torque assigned to the distance range (AB) of the crankshaft (10), a torsion-related load of the crankshaft (10) is continuously detected at least once per work cycle of a cylinder (30).

6. The method according to at least one of the preceding claims, **characterized in that**, by way of a repeated determination of a torque assigned to the distance range (AB), by means of an engine control unit (ECU), continuous regulation and/or monitoring of the fuel injection is carried out, in particular such that a net torque is determined.

7. The method according to at least one of the preceding claims, **characterized in that** the fuel injection is carried out by means of regulation and/or monitoring for the cylinder which is attached by means of a connecting rod (40) to a crank, which is comprised in the distance range (AB) or which adjoins the distance range (AB), in particularto reduce pollutant emissions of the piston engine (1000) and/or to permanently observe emission limiting values.

8. The method according to at least one of the preceding claims, **characterized in that**, via repeated torque measurements in ongoing operation of the piston engine (1000), a torque assigned to the distance range is detected at speeds above 2000 RPM, in particular above 6000 RPM.

9. The method according to at least one of the preceding claims, **characterized in that** at least the rotational angle sensors (S1, S2) assigned to the distance range (AB) are without contact with the crankshaft (10), such that contactless determination of rotational angles assigned to the distance range is carried out.

10. The method according to at least one of the preceding claims, **characterized in that**

    - the at least one magnetosensitive sensor
    is a magnetoresistive sensor selected from the group of sensors comprising: an AMR sensor, a Hall sensor, a GMR sensor, and/or
    - is a magnetoelastic sensor selected from the group of sensors comprising: a magnetostrictive sensor and an inverse magnetostrictive sensor, and/or
    - the torque sensor system (50) has one or more sensors from the group comprising: a torque flange, a strain gauge, a field plate sensor, a sensor having a magnetooptical layer.

11. The method according to at least one of the preceding claims, **characterized in that** the torque of the crankshaft (10) is determined on the basis of the angular offset which is determined by forming a difference of the first rotational angle measured by the first rotational angle sensor (S1) and the second rotational angle measured by the second rotational angle sensor (S2), in particular depending on the location of the first and second rotational angle sensor, in particular of the individual further rotational angle sensors.

12. The method according to at least one of the preceding claims, **characterized in that**

    - a first part of the torque is assigned to an internal torque of the crankshaft (10), and/or
    - a second part of the torque is assigned to a net torque.

13. The method according to at least one of the preceding claims, **characterized in that** the torque is assigned by means of a filter (F) or similar downstream signal processing to a first and/or second part of the torque, wherein

    - the first part of the torque, in particular the internal torque, use used for monitoring or early damage detection, and/or wherein
    - the second part of the torque, in particular the net torque, is used for engine regulation.

14. The method according to at least one of the preceding claims, **characterized in that**

    - torsional oscillation measurements are carried out on the piston engine (1000) by means of the torque sensor system (50), and/or
    - performance data are transmitted at an interface for continuous monitoring of the piston engine (1000).

15. A piston engine (1000), in particular an internal combustion engine, preferably a piston engine with an electric machine, in particular a generator and/or motor (100), preferably as a hybrid drive, wherein the piston engine (1000)

    - has a number of cylinders (A1 - An, B1 - Bn), and
    - has a crankshaft (10) mounted using bearing journals in main bearings, which furthermore has a number of cranks and shaft journals in alternating sequence between the bearing journals, wherein
    - the crankshaft (10) converts a movement of at least one piston (20) in a cylinder (30) of the number of cylinders (A1 - An, B1 - Bn) with load absorption by at least one connecting rod (40) attached to one of the cranks of the crankshaft (10) into a rotational movement, and
- the crankshaft (10) experiences a deformation and/or tension causing torsion due to the load absorption, and
- the piston engine (1000) furthermore has a torque sensor system (50), assigned to the crankshaft (10), having at least one first and one second rotational angle sensor (S1, S2), wherein
in the method
- the first and the second rotational angle sensor (S1, S2) are magnetosensitive sensors and are part of a number of rotational angle sensors (S1, S2,..., Sn) spaced apart from one another and a first and a second rotational angle of the torsion directly from the crankshaft (10) is thus measurable in such a way that the first (S1) and second (S2) rotational angle sensor are spaced apart from one another over a distance range (AB) of the crankshaft (10), wherein
the first and second rotational angle are measurable in the distance range (AB), and
- an angular offset between the first and second rotational angle (S1, S2) is determinable by means of an offset computer (60), which results from the torsion of the load-subjected crankshaft (10),
**characterized in that**
- the distance range (AB) between the first (S1) and second (S2) rotational angle sensor along the crankshaft (10) is restricted to a partial range of the distance between the bearing journals, and
- the partial range comprises a subgroup of the number of cranks and/or shaft journals, so that the angular offset is to be assigned to the subgroup of the number of cranks and shaft journals, wherein
- the distance range (AB) is restricted to
- at least one shaft journal range, comprising
at least one shaft journal (95) between a first and a second crank, and/or
- at least one crank range, comprising at least one crank (90), such that
- the angular offset can be assigned to the at least one shaft journal and/or the at least one crank (90).


## Revendications

1. Procédé pour faire fonctionner une machine à piston (1000), notamment un moteur à combustion interne,

- la machine à piston (1000)
- possédant un certain nombre de cylindres (A1 - An, B1 - Bn), et
- possédant un vilebrequin (10) supporté par des tourillons de palier dans des paliers principaux, possédant en outre un certain nombre de coudes et de tourillons d'arbre en séquence alternée entre les tourillons de palier,
- le vilebrequin (10) convertissant un mouvement d'au moins un piston (20) dans un cylindre (30) du certain nombre de cylindres (A1 - An, B1 - Bn) en un mouvement de rotation avec reprise de charge par au moins une bielle (40) montée au niveau de l'un des coudes du vilebrequin (10), et
- le vilebrequin subissant une déformation et/ou une contrainte entraînant une torsion du fait de la reprise de charge, et
- la machine à piston (1000) possédant en outre un système de détection de couple (50), comprenant au moins un premier et un deuxième capteur d'angle de rotation (S1, S2), associé au vilebrequin (10),
dans le procédé,
- le premier et le deuxième capteur d'angle de rotation (S1, S2) sont des capteurs magnétosensibles et font partie d'un certain nombre de capteurs d'angle de rotation (S1, S2, ..., Sn) espacés les uns des autres et mesurant un premier et un deuxième angle de rotation de la torsion directement sur le vilebrequin (10) de telle sorte que le premier (S1) et le deuxième (S2) capteur d'angle de rotation sont espacés l'un de l'autre par une zone d'écart (AB) du vilebrequin (10),
les premier et deuxième angles de rotation sont mesurés dans la zone d'écart (AB), et
- un décalage angulaire entre le premier et le deuxième angle de rotation (S1, S2) est déterminé, lequel résulte de la torsion du vilebrequin (10) soumis à une charge,
**caractérisé en ce que**
- la zone d'écart (AB) entre le premier (S1) et le deuxième (S2) capteur d'angle de rotation le long du vilebrequin (10) se limite à une zone partielle de l'écart entre les tourillons de palier, et
- la zone partielle comporte un sous-ensemble du certain nombre de coudes et/ou de tourillons d'arbre, de sorte que le décalage angulaire est à associer au sous-ensemble du certain nombre de coudes et de tourillons d'arbre,
- la zone d'écart (AB) étant limitée à
- au moins une zone de tourillon d'arbre, comportant au moins un tourillon d'arbre (95) entre un premier et un deuxième coude, et/ou

- au moins une zone de coude, comportant au moins un coude (90), de telle sorte que
- le décalage angulaire peut être associé à l'au moins un tourillon d'arbre et/ou à l'au moins un coude (90).

2. Procédé selon la revendication 1, **caractérisé en ce que** le décalage angulaire entre le premier et le deuxième angle de rotation (S1, S2) est déterminé, notamment au moyen d'un calculateur de décalage (60), de telle sorte qu'un couple associé à la zone d'écart (AB), résultant du premier et du deuxième angle de rotation mesurés, peut être déterminé, le couple associé à la zone d'écart (AB) étant déterminé en cours de fonctionnement de la machine à piston (1000), le couple associé à la zone d'écart étant notamment déterminé de manière répétée en cours de fonctionnement.

3. Procédé selon la revendication 1 ou 2, **caractérisé en ce que** la zone d'écart (AB) est limitée à

- une zone individuelle de tourillon d'arbre comportant un tourillon d'arbre (95) unique entre un premier et un deuxième coude et/ou
- une zone individuelle de coude comportant un coude unique, de telle sorte que
- le décalage angulaire peut être associé aux tourillons d'arbre (95) individuels et/ou au coude individuel.

4. Procédé selon au moins l'une des revendications précédentes, **caractérisé en ce que** le certain nombre de capteurs d'angle de rotation (S1, S2, ..., Sn) espacés les uns des autres comporte une pluralité de paires de premiers (S1) et de deuxièmes (S2) capteurs d'angle de rotation entre les paliers principaux, les capteurs d'angle de rotation des paires étant respectivement espacés l'un de l'autre par une zone individuelle, notamment une zone individuelle de tourillon d'arbre et/ou une zone individuelle de coude, du vilebrequin (10).

5. Procédé selon au moins l'une des revendications précédentes, **caractérisé en ce que** le couple associé à la zone d'écart (AB) est déterminé de manière répétée en cours de fonctionnement et une charge due à la torsion du vilebrequin (10) est acquise en continu au moins une fois par cycle de travail d'un cylindre (30) en vue de la détermination répétée de la zone d'écart (AB) du vilebrequin (10).

6. Procédé selon au moins l'une des revendications précédentes, **caractérisé en ce qu'**une régulation et/ou une surveillance continue de l'injection de carburant est effectuée au moyen d'un contrôleur de moteur (ECU) par une détermination répétée d'un couple associé à la zone d'écart (AB), notamment de telle sorte qu'un couple utile est déterminé.

7. Procédé selon au moins l'une des revendications précédentes, **caractérisé en ce qu'**une injection de carburant est effectuée au moyen d'une régulation et/ou d'une surveillance pour le cylindre qui est monté au moyen d'une bielle (40) sur un coude, lequel est compris dans la zone d'écart (AB) ou est adjacent à la zone d'écart (AB), notamment en vue de réduire les émissions de substances polluantes de la machine à piston (1000) et/ou en vue de respecter durablement les valeurs limites d'émission.

8. Procédé selon au moins l'une des revendications précédentes, **caractérisé en ce qu'**un couple associé à la zone d'écart est acquis à des vitesses de rotation supérieures à 2000 tr/min, notamment supérieures à 6000 tr/min, par des mesures répétées du couple en cours de fonctionnement de la machine à piston (1000).

9. Procédé selon au moins l'une des revendications précédentes, **caractérisé en ce qu'**au moins les capteurs d'angle de rotation (S1, S2) associés à la zone d'écart (AB) sont sans contact avec le vilebrequin (10), de telle sorte qu'une détermination sans contact des angles de rotation associés à la zone d'écart a lieu.

10. Procédé selon au moins l'une des revendications précédentes, **caractérisé en ce que**

- l'au moins un capteur magnétosensible
  est un capteur magnétosensible choisi dans le groupe de capteurs comprenant : un capteur AMR, un capteur à effet Hall, un capteur GMR, et/ou
- est un capteur magnéto-élastique choisi dans le groupe de capteurs comprenant : un capteur magnétostrictif et un capteur magnétostrictif inverse, et/ou
- le système de détection de couple (50) possède un ou plusieurs capteurs du groupe comprenant : une bride de couple, une jauge de contrainte, un capteur à plaque de champ, un capteur pourvu d'une couche magnéto-optique.

**11.** Procédé selon au moins l'une des revendications précédentes, **caractérisé en ce que** le couple du vilebrequin (10) est déterminé sur la base du décalage angulaire, lequel est déterminé par calcul d'une différence entre le premier angle de rotation mesuré par le premier capteur d'angle de rotation (S1) et le deuxième angle de rotation mesuré par le deuxième capteur d'angle de rotation (S2), notamment en fonction de la position des premier et deuxième capteurs d'angle de rotation, notamment des capteurs d'angle de rotation supplémentaires individuels.

**12.** Procédé selon au moins l'une des revendications précédentes, **caractérisé en ce que**

- une première partie du couple est associée à un couple intérieur du vilebrequin (10), et/ou
- une deuxième partie du couple est associée à un couple utile.

**13.** Procédé selon au moins l'une des revendications précédentes, **caractérisé en ce que**
le couple est associé à une première et/ou une deuxième partie du couple au moyen d'un filtre (F) ou d'un traitement de signal similaire monté en aval,

- la première partie du couple, notamment le couple intérieur, étant utilisé pour une surveillance ou une reconnaissance précoce de dommage, et/ou
- la deuxième partie du couple, notamment le couple utile, étant utilisé pour une régulation de moteur.

**14.** Procédé selon au moins l'une des revendications précédentes, **caractérisé en ce que**

- des mesures de vibrations sont effectuées au niveau de la machine à piston (1000) au moyen du système de détection de couple (50), et/ou
- des données de performance sont communiquées à une interface pour la surveillance continue de la machine à piston (1000).

**15.** Machine à piston (1000), notamment un moteur à combustion interne, de préférence une machine à piston comprenant une machine électrique, notamment un générateur et/ou un moteur (100), de préférence sous la forme de propulsion hybride, la machine à piston (1000)

- possédant un certain nombre de cylindres (A1 - An, B1 - Bn), et
- possédant un vilebrequin (10) supporté par des tourillons de palier dans des paliers principaux, possédant en outre un certain nombre de coudes et de tourillons d'arbre en séquence alternée entre les tourillons de palier,
- le vilebrequin (10) convertissant un mouvement d'au moins un piston (20) dans un cylindre (30) du certain nombre de cylindres (A1 - An, B1 - Bn) en un mouvement de rotation avec reprise de charge par au moins une bielle (40) montée au niveau de l'un des coudes du vilebrequin (10), et
- le vilebrequin subissant une déformation et/ou une contrainte entraînant une torsion du fait de la reprise de charge, et
- la machine à piston (1000) possédant en outre un système de détection de couple (50), comprenant au moins un premier et un deuxième capteur d'angle de rotation (S1, S2), associé au vilebrequin (10),
- le premier et le deuxième capteur d'angle de rotation (S1, S2) étant des capteurs magnétosensibles et faisant partie d'un certain nombre de capteurs d'angle de rotation (S1, S2, ..., Sn) espacés les uns des autres et un premier et un deuxième angle de rotation de la torsion pouvant ainsi être mesuré directement sur le vilebrequin (10), de telle sorte que le premier (S1) et le deuxième (S2) capteur d'angle de rotation sont espacés l'un de l'autre par une zone d'écart (AB) du vilebrequin, les premier et deuxième angles de rotation pouvant être mesurés dans la zone d'écart (AB), et
- un décalage angulaire entre le premier et le deuxième angle de rotation (S1, S2) pouvant être déterminé, lequel résulte de la torsion du vilebrequin (10) soumis à une charge,
**caractérisé en ce que**
- la zone d'écart (AB) entre le premier (S1) et le deuxième (S2) capteur d'angle de rotation le long du vilebrequin (10) se limite à une zone partielle de l'écart entre les tourillons de palier, et
- la zone partielle comporte un sous-ensemble du certain nombre de coudes et/ou de tourillons d'arbre, de sorte que le décalage angulaire est à associer au sous-ensemble du certain nombre de coudes et de tourillons d'arbre,
- la zone d'écart (AB) étant limitée à
- au moins une zone de tourillon d'arbre, comportant au moins un tourillon d'arbre (95) entre un premier et un deuxième coude, et/ou
- au moins une zone de coude, comportant au moins un coude (90), de telle sorte que
- le décalage angulaire peut être associé à l'au moins un tourillon d'arbre et/ou à l'au moins un coude (90).

**FIG. 1**

FIG. 2

FIG. 3

FIG. 4

EP 3 810 917 B1

FIG. 5a

FIG. 5b

25

FIG. 6a

FIG. 6b

FIG. 7a

FIG. 7b

FIG. 8

FIG. 9

FIG. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 200701255 A1
- WO 9954697 A
- EP 2673594 B1
- US 2017241357 A1

**In der Beschreibung aufgeführte Nicht-Patentliteratur**

- Masseträgheitsloses Messsystem für Winkel- und Drehzahlmessung in hochdynamischen Antrieben. **DR. ROLF SATTLER.** erschienen in Konstruktion. Springer Verlag, 2-2016